(19) **Europäisches Patentamt / European Patent Office / Office européen des brevets**

(11) **EP 4 213 415 A1**

(12) **EUROPEAN PATENT APPLICATION**
published in accordance with Art. 153(4) EPC

(43) Date of publication:
**19.07.2023 Bulletin 2023/29**

(21) Application number: **21881764.1**

(22) Date of filing: **09.09.2021**

(51) International Patent Classification (IPC):
***H04B 17/309*** (2015.01)

(52) Cooperative Patent Classification (CPC):
**G06N 3/08; H04B 17/309; H04B 17/318;
H04N 7/18; H04W 4/02; H04W 24/06; H04W 24/08**

(86) International application number:
**PCT/CN2021/117445**

(87) International publication number:
**WO 2022/083345 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.10.2020 CN 202011124425**

(71) Applicant: **Huawei Technologies Co., Ltd.
Shenzhen, Guangdong 518129 (CN)**

(72) Inventors:
• **HUANG, Qingchao
Shenzhen, Guangdong 518129 (CN)**
• **LONG, Shuiping
Shenzhen, Guangdong 518129 (CN)**

(74) Representative: **Thun, Clemens
Mitscherlich PartmbB
Patent- und Rechtsanwälte
Sonnenstraße 33
80331 München (DE)**

(54) **METHOD FOR DETECTING VIDEO MONITORING DEVICE, AND ELECTRONIC DEVICE**

(57)    This application provides a method for detecting a video surveillance device and an electronic device. In the method, the electronic device determines a target detection channel based on information about an access point around the electronic device, where signal strength of the channel is greater than or equal to a preset threshold, and/or the channel is a channel whose frequency band is a 2.4 GHz frequency band; and obtains traffic data corresponding to a target device on the channel, and determines, based on the traffic data and a detection model, whether the target device is a video surveillance device. The solutions provided in this application can improve comprehensiveness and accuracy of detecting the video surveillance device, thereby reducing occurrence of a user privacy infringement event, and ensuring user privacy security.

600

Scan a surrounding access point, and screen out a target detection channel list — S610

Obtain traffic data on a target detection channel — S620

Accelerate channel detection — S621

Extract an eigenvector from the traffic data — S630

S640 — Train a traffic data classifier model

S650 — Determine a type of the traffic data by using a detection model, and determine, based on the type of the traffic data, whether a device corresponding to the traffic data is a video surveillance device

Prompt that no video surveillance device exists — S670

Prompt that the video surveillance device exists — S660

FIG. 5

**Description**

This application claims priority to Chinese Patent Application No. 202011124425.5, filed with the China National Intellectual Property Administration on October 20, 2020 and entitled "METHOD FOR DETECTING VIDEO SURVEILLANCE DEVICE AND ELECTRONIC DEVICE", which is incorporated herein by reference in its entirety.

**TECHNICAL FIELD**

This application relates to the field of video surveillance device detection technologies, and in particular, to a method for detecting a video surveillance device and an electronic device.

**BACKGROUND**

In recent years, secret photography often occurs in places such as a rental house and a hotel, and related reports are constant in news. It can be learned from search results for secret photography products on e-commerce platforms and related surveys that, currently, pinhole camera refitting has penetrated into our daily products, and employs a very hidden refitting means. This brings great risks to our privacy security. According to search results for micro surveillance cameras on Jingdong and Taobao, more than 96% top-100-sales video surveillance devices support a wireless fidelity (wireless fidelity, Wi-Fi) wireless connection.

In view of the foregoing problem, one solution is a hardware-based solution. A specific hardware device is used to detect a video surveillance device (for example, the pinhole camera) or detect a feature signal in a working process of the video surveillance device, for example, a reflective feature of a lens of the video surveillance device, a heat emitting feature of the video surveillance device in the working process, or a feature of a radio electromagnetic wave signal generated in the working process of the video surveillance device, so as to detect the video surveillance device. Another solution is a software algorithm-based solution with a technical idea to obtain response information of a target device by using an active detection technology, extract a device fingerprint from the response information, and identify a type of the device based on a device fingerprint library in a server, so as to detect a video surveillance device.

The hardware-based solution includes: (1) A SpyFinder detector is a portable pinhole camera detection apparatus including a flash array formed by six high-light red light-emitting diodes (light-emitting diode, LED), an entire room is scanned after the flash array is started, and a user observes a red reflective spot through an observation hole, to detect and discover a camera. (2) After a video surveillance device works for a long time, a temperature of a local area increases. A thermal imager can be used to scan entire space of a room, and whether there is a video surveillance device is further checked after a suspicious heat source is found. (3) The video surveillance device is detected through infrared thermal imaging identification and a radio electromagnetic wave signal.

However, the foregoing hardware-based solution requires extra costs, the hardware is difficult to be integrated into a terminal device currently, much interference occurs when the video surveillance device is detected based on the specular reflection feature of the camera, or the heat emitting feature of the surveillance device, or the radio electromagnetic wave signal, and both a false detection rate and a missed detection rate are high. This reduces user experience.

The software-based solution includes: A mobile phone running detection is connected to a wireless network, obtains a live device list in a current local area network, obtains a port list for a target device by using an existing port list or a scanning means, performs port detection on the target device, extracts a device keyword from response information of the port detection, and identifies a type of the device based on a device fingerprint database in a server.

However, a technical principle of the software-based solution is to identify the type of the device in network space, and a detection device needs to be connected to the wireless network in which the video surveillance device is located. There is no device detection capability for a network without access permission or a hidden wireless network. In addition, the type of the device is identified based on the device fingerprint database in the server, and completeness of the device fingerprint library affects precision of device type identification.

**SUMMARY**

This application provides a method for detecting a video surveillance device and an electronic device, to detect the video surveillance device without adding an additional hardware module and without accessing a network in which the video surveillance device is located. This can improve comprehensiveness and accuracy of detecting the video surveillance device, thereby reducing occurrence of a user privacy infringement event, and ensuring user privacy security.

According to a first aspect, a method for detecting a video surveillance device is provided. The method is applied to an electronic device and includes: determining a first target detection channel based on information about an access point around the electronic device, where the first target detection channel is a channel whose signal strength is greater than or equal to a first preset threshold, and/or a channel whose frequency band is a 2.4 GHz frequency band; obtaining first target traffic data on the target detection channel, where the first target traffic data corresponds to a first target device; and determining, based on the first target traffic data and a detection model, whether the first target device is a video surveillance device, where the detection model includes a first machine learning model or a first deep learning model.

According to the method for detecting a video surveillance device provided in this application, it is determined, based on the obtained first target traffic data on the first target detection channel and the detection model, whether the first target device corresponding to the first target traffic data is the video surveillance device, so that the video surveillance device can be detected without adding an additional hardware module, and the video surveillance device can be detected without accessing a network in which the video surveillance device is located. This can improve comprehensiveness and accuracy of detecting the video surveillance device, thereby reducing occurrence of a user privacy infringement event.

With reference to the first aspect, in some possible implementations, after the obtaining first target traffic data on the first target detection channel, the method further includes: if a quantity of bytes of the first target traffic data obtained within preset duration is greater than or equal to a second preset threshold, determining that at least one first target device exists.

According to the solutions provided in embodiments of this application, when the quantity of the bytes of the first target traffic data obtained by the electronic device within the preset duration is greater than or equal to the second preset threshold, it is determined that the first target device exists, and whether the first target device is the video surveillance device is determined. This can reduce duration for detecting the video surveillance device by the electronic device, and improve detection efficiency.

With reference to the first aspect, in some possible implementations, after the obtaining first target traffic data on the first target detection channel, the method further includes: if a quantity of bytes of the first target traffic data obtained within preset duration is less than a second preset threshold, determining that the first target device does not exist; obtaining second target traffic data on a second target detection channel, where the second target traffic data corresponds to a second target device, and the second target detection channel is a channel whose signal strength is greater than or equal to the first preset threshold, and/or a channel whose frequency band is a 2.4 GHz frequency band; and determining, based on the second target traffic data and the detection model, whether the second target device is the video surveillance device.

According to the solutions provided in embodiments of this application, when the quantity of the bytes of the first target traffic data obtained by the electronic device within the preset duration is less than the second preset threshold, it is determined that the first target device does not exist, the second target traffic data corresponding to the second target device can be obtained, and whether the second target device is the video surveillance device can be determined based on the second target traffic data and the detection model. This can reduce duration for detecting the video surveillance device by the electronic device, and improve detection efficiency.

With reference to the first aspect, in some possible implementations, the method further includes: if it is determined that the first target device is the video surveillance device, changing light intensity of a local area; obtaining third target traffic data, where the third target traffic data is traffic data of the first target device under first light intensity; obtaining fourth target traffic data, where the fourth target traffic data is traffic data of the first target device under second light intensity; and identifying a direction and location of the first target device based on the third target traffic data, the fourth target traffic data, and a locating model, where the locating model includes a second machine learning model or a second deep learning model.

According to the solutions provided in embodiments of this application, the electronic device can identify a direction and location of the video surveillance device based on the obtained third target traffic data, the obtained fourth target traffic data, and the locating model. This helps a user locate the video surveillance device in a timely and accurate manner, and can reduce occurrence of a user privacy infringement event, thereby protecting user privacy.

With reference to the first aspect, in some possible implementations, the third target traffic data is collected when a light source of the electronic device is aligned with a preset direction and the light source is in an on time window. The fourth target traffic data is collected when the light source is aligned with the preset direction and the light source is in an off time window, or collected when the light source is not aligned with the preset direction.

With reference to the first aspect, in some possible implementations, the second machine learning model or the second deep learning model is obtained by training collected first positive sample data and first negative sample data. The first positive sample data is data generated when the electronic device is in an on time window and the light source of the electronic device is aligned with a known video surveillance device, and the first negative sample data is data generated when the electronic device is in an off time window or the light source is not aligned with the known video surveillance device. Alternatively, the first positive sample data is data generated when the electronic device is in an off time window or the light source is not aligned with the known video surveillance device, and the first negative sample data is data generated when the electronic device is in an on time window and the light source is aligned with the known video surveillance device.

With reference to the first aspect, in some possible implementations, the identifying a direction and location of the first target device based on the third target traffic data, the fourth target traffic data, and a locating detection model includes: performing sample segmentation on the third target traffic data and the fourth target traffic data, to obtain target traffic data that is corresponding to the first target device and that is in an on time window and off time window of each of M periods; separately segmenting the target traffic data that is corresponding to the first target device and that is in each of the M periods into m1 groups of traffic data and m2 groups of traffic data, where the m1 groups of traffic data are data in the on time window, the m2 groups of traffic data are data in the off time window, and m1 and m2 are positive integers greater than or equal to 1; inputting first target information into the locating model, to obtain confidence levels of the m1 groups of traffic data and the m2 groups of traffic data in each period, where the first target information is an eigenvector of the m1 groups of traffic data and an eigenvector of the m2 groups of traffic data in each period, or the first target information is the m1 groups of traffic data and the m2 groups of traffic data in each period; identifying the direction and the location of the first target device based on the confidence levels of the m1 groups of traffic data and the m2 groups of traffic data in each period and a third preset threshold.

With reference to the first aspect, in some possible implementations, if the locating model is the second machine learning model, the first target information is the eigenvector of the m1 groups of traffic data and the eigenvector of the m2 groups of traffic data in each period. Alternatively, if the locating model is the second deep learning model, the first target information is the m1 groups of traffic data and the m2 groups of traffic data in each period.

With reference to the first aspect, in some possible implementations, the eigenvector of the m1 groups of traffic data or the eigenvector of the m2 groups of traffic data includes at least one of the following vectors: a traffic rate discrete Fourier transform coefficient, a packet-length-related statistical feature, a duration-related statistical feature, and a data frame time-of-arrival-related statistical feature.

With reference to the first aspect, in some possible implementations, the identifying, based on the confidence levels of the m1 groups of traffic data and the m2 groups of traffic data in each period and a third preset threshold, a type of the target traffic data corresponding to the first target device includes: identifying, based on an average value of the confidence levels of the m1 groups of traffic data in each period, an average value of the confidence levels of the m2 groups of traffic data in each period, and the third preset threshold, the type of the target traffic data corresponding to the first target device; or identifying, based on m3, m4, m5, and m6, the type of the target traffic data corresponding to the first target device, where m3 is a quantity of groups of traffic data that are in the m1 groups of traffic data in each period and that are greater than or equal to the third preset threshold, m4 is a quantity of groups of traffic data that are in the m1 groups of traffic data in each period and that are less than the third preset threshold, m5 is a quantity of groups of traffic data that are in the m2 groups of traffic data in each period and that are greater than or equal to the third preset threshold, and m6 is a quantity of groups of traffic data that are in the m2 groups of traffic data in each period and that are less than the third preset threshold.

According to the solutions provided in embodiments of this application, the electronic device can identify the direction and the location of the first target device based on the first sequence formed by the type of the target traffic data corresponding to the first target device and the second sequence formed when the light source of the electronic device in the on time window or the off time window. This helps a user locate the video surveillance device in a timely and accurate manner, and can reduce occurrence of a user privacy infringement event, thereby protecting user privacy.

With reference to the first aspect, in some possible implementations, if the first positive sample data is the data generated when the electronic device is in the on time window and the light source of the electronic device is aligned with the known video surveillance device, the first negative sample data is the data generated when the electronic device is in the off time window or the light source is not aligned with the known video surveillance device; and

the identifying, based on an average value of the confidence levels of the m1 groups of traffic data in each period, an average value of the confidence levels of the m2 groups of traffic data in each period, and the third preset threshold, the type of the target traffic data corresponding to the first target device includes: if an average value of confidence levels of all m1 groups of traffic data in the M periods is greater than or equal to the third preset threshold, identifying that all the m1 groups of traffic data are of a type of the data generated when the light source of the electronic device is aligned with the known video surveillance device and the electronic device is in the on time window; and if an average value of confidence levels of all m2 groups of traffic data in the M periods is less than the third preset threshold, identifying that all the m2 groups of traffic data are of a type of the data generated when the light source of the electronic device is not aligned with the known video surveillance device or a type of the data generated when the electronic device is in the off time window; or
the identifying, based on m3, m4, m5, and m6, the type of the target traffic data corresponding to the first target device includes: if m3≥m4 and m5≤m6, identifying that the type of the target traffic data is a type of the data generated when the light source of the electronic device is aligned with the known video surveillance device and the electronic device is in the on time window; or if m3<m4 and m5≤m6, identifying that the type of the target traffic data is a type of the data generated when the light source of the electronic device is not aligned with the known video surveillance device or a type of the data generated when the electronic device is in the off time window.

With reference to the first aspect, in some possible implementations, if the first positive sample data is the data generated when the electronic device is in the off time window or the light source is not aligned with the known video surveillance device, the first negative sample data is the data generated when the electronic device is in the on time window and the light source of the electronic device is aligned with the known video surveillance device; and

the identifying, based on an average value of the confidence levels of the m1 groups of traffic data in each period, an average value of the confidence levels of the m2 groups of traffic data in each period, and the third preset threshold, the type of the target traffic data corresponding to the first target device includes: if an average value of confidence levels of all m1 groups of traffic data in the M periods is less than the third preset threshold, identifying that all the m1 groups of traffic data are of a type of the data generated when the light source of the electronic device is aligned with the known video surveillance device and the electronic device is in the on time window; and if an average value of confidence levels of all m2 groups of traffic data in the M periods is greater than or equal to the third preset threshold, identifying that all the m2 groups of traffic data are of a type of the data generated when the light source of the electronic device is not aligned with the known video surveillance device or a type of the data generated when the electronic device is in the off time window; or

the identifying, based on m3, m4, m5, and m6, the type of the target traffic data corresponding to the first target device includes: if m3≥m4 and m5≥m6, identifying that the type of the target traffic data is a type of the data generated when the light source of the electronic device is not aligned with the known video surveillance device or a type of the data generated when the electronic device is in the off time window; or if m3<m4 and m5≥m6, identifying that the type of the target traffic data is a type of the data generated when the light source of the electronic device is aligned with the known video surveillance device and the electronic device is in the on time window.

With reference to the first aspect, in some possible implementations, the identifying the direction and the location of the first target device based on a first sequence formed by the type of the target traffic data corresponding to the first target device and a second sequence formed when the electronic device is in an on time window or an off time window includes:

if a correlation coefficient between the first sequence and the second sequence is greater than or equal to a fourth preset threshold, the first target device is located in the preset direction with which the light source of the electronic device is aligned; or
if a correlation coefficient between the first sequence and the second sequence is less than a fourth preset threshold, the first target device is not located in the preset direction with which the light source of the electronic device is aligned.

According to the solutions provided in embodiments of this application, the electronic device identifies the direction and the location of the first target device based on the correlation coefficient between the first sequence and the second sequence and the fourth preset threshold. Further, this can help a user accurately locate the video surveillance device, and can reduce occurrence of a user privacy infringement event, thereby protecting user privacy.

With reference to the first aspect, in some possible implementations, the identifying a direction and location of the first target device based on the third target traffic data, the fourth target traffic data, and a locating model includes: identifying the direction and the location of the first target device based on a moving track of the electronic device, the third target traffic data, the fourth target traffic data, and the locating model, where the moving track is a track formed by separately and sequentially aligning the electronic device with each direction in a current environment.

According to the solutions provided in embodiments of this application, the electronic device can identify the direction and the location of the first target device based on the moving track of the electronic device, the third target traffic data, the fourth target traffic data, and the locating model. This can improve comprehensiveness of detecting the video surveillance device, thereby reducing occurrence of a user privacy infringement event, and protecting user privacy.

With reference to the first aspect, in some possible implementations, the determining, based on the first target traffic data and a detection model, whether the first target device is a video surveillance device includes: segmenting the first target traffic data into n groups of traffic data, where n is a positive integer greater than or equal to 1; inputting second target information into the detection model, to obtain confidence levels of the n groups of traffic data, where the second target information is an eigenvector of the n groups of traffic data or the n groups of traffic data; and determining, based on the confidence levels of the n groups of traffic data and a fifth preset threshold, whether the first target device is the video surveillance device.

According to the solutions provided in embodiments of this application, the electronic device determines, based on the first target traffic data and the detection model, whether the first target device is the video surveillance device. The video surveillance device can be detected without adding an additional hardware module, and the video surveillance device can be detected without accessing a network in which the video surveillance device is located. This can improve comprehensiveness and accuracy of detecting the video surveillance device, thereby reducing occurrence of a user privacy infringement event, and protecting user privacy.

With reference to the first aspect, in some possible implementations, if the detection model is the first machine learning model, the second target information is the eigenvector of the n groups of traffic data; or if the detection model is the first deep learning model, the second target information is the n groups of traffic data.

With reference to the first aspect, in some possible implementations, the eigenvector of the n groups of traffic data includes at least one of the following vectors: a packet-length-related statistical feature of the n groups of traffic data, a duration-related statistical feature of the n groups of traffic data, a time-of-arrival-related statistical feature of the n groups of traffic data, an instantaneous traffic bandwidth of the n groups of traffic data, a data-rate-related statistical feature of the n groups of traffic data, and a time-frequency-pattern-related texture feature a data rate of the n groups of traffic data.

With reference to the first aspect, in some possible implementations, the detection model is obtained by training second positive sample traffic data and second negative sample traffic data;

if the second positive sample traffic data is traffic data generated by training a known video surveillance device, the second negative sample traffic data is traffic data generated by training a non-video surveillance device; and the determining, based on the confidence levels of the n groups of traffic data and a fifth preset threshold, whether the first target device is the video surveillance device includes: if an average value of the confidence levels of the n groups of traffic data is greater than or equal to the fifth preset threshold, the first target device is the video surveillance device; or if an average value of the confidence levels of the n groups of traffic data is less than the fifth preset threshold, the first target device is not the video surveillance device; or

if $n1 \geq n2$, the first target device is the video surveillance device; or if $n1 < n2$, the first target device is not the video surveillance device, where n1 is a quantity of groups of traffic data that are in the n groups of traffic data and whose confidence levels are greater than or equal to the fifth preset threshold, and n2 is a quantity of groups of traffic data that are in the n groups of traffic data and whose confidence levels are less than the fifth preset threshold.

With reference to the first aspect, in some possible implementations, the detection model is obtained by training second positive sample traffic data and second negative sample traffic data;

if the second positive sample traffic data is traffic data generated by training a non-video surveillance device, the second negative sample traffic data is traffic data generated by training a known video surveillance device; and the determining, based on the confidence levels of the n groups of traffic data and a fifth preset threshold, whether the first target device is the video surveillance device includes: if an average value of the confidence levels of the n groups of traffic data is less than the fifth preset threshold, the first target device is the video surveillance device; or if an average value of the confidence levels of the n groups of traffic data is greater than or equal to the fifth preset threshold, the first target device is not the video surveillance device; or

if $n3 \geq n4$, the first target device is the video surveillance device; or if $n3 < n4$, the first target device is not the video surveillance device, where n3 is a quantity of groups of traffic data that are in the n groups of traffic data and whose confidence levels are less than the fifth preset threshold, and n4 is a quantity of groups of traffic data that are in the n groups of traffic data and whose confidence levels are greater than or equal to the fifth preset threshold.

With reference to the first aspect, in some possible implementations, the method further includes: obtaining first MAC layer information of the first target traffic data; and performing traffic splitting on the first target traffic data based on the first MAC layer information, to obtain fifth target traffic data and sixth target traffic data, where the fifth target traffic data and the sixth target traffic data respectively correspond to a third target device and a fourth target device; and the determining, based on the first target traffic data and a detection model, whether the first target device is a video surveillance device includes: determining, based on the fifth target traffic data and the detection model, whether the third target device is the video surveillance device; and determining, based on the sixth target traffic data and the detection model, whether the fourth target device is the video surveillance device.

In the solutions provided in this application, after traffic splitting is performed on the obtained first target traffic data based on the first MAC layer information, whether a device corresponding to traffic data obtained through traffic splitting is a video surveillance device is respectively detected. This can further improve accuracy of detecting the video surveillance device.

With reference to the first aspect, in some possible implementations, a target detection channel list includes a second target detection channel, and the second target detection channel is a channel whose signal strength is greater than or equal to the first preset threshold, and/or a channel whose frequency band is a 2.4 GHz frequency band; and after the obtaining first target traffic data on the first target detection channel, the method further includes: obtaining second target traffic data on the second target detection channel, where the second target traffic data corresponds to a second target device; and determining, based on the second target traffic data and the detection model, whether the second target device is the video surveillance device.

According to the solutions provided in this application, after the first target traffic data is obtained, the second target traffic data corresponding to the second target device can be further obtained, and whether the second target device is the video surveillance device is determined based on the second target traffic data and the detection model. This can implement comprehensive of detecting the video surveillance device, thereby reducing occurrence of a user privacy infringement event, and protecting user privacy.

With reference to the first aspect, in some possible implementations, before the obtaining first target traffic data on the first target detection channel, the method further includes: setting a working mode of a Wi-Fi chip of the electronic device to a monitoring mode.

According to a second aspect, a GUI is provided. The graphical user interface is stored in an electronic device. The electronic device includes a display, a memory, and one or more processors. The one or more processors are configured to execute one or more computer programs stored in the memory. The graphical user interface includes a first GUI displayed on the display, where the first GUI includes an icon of a first application, and is used to detect whether a video surveillance device exists in a current network space, and locate the video surveillance device when the video surveillance device exists; and displaying a second GUI on the display in response to a touch event for the first application, where the second GUI includes a detection control.

With reference to the second aspect, in some possible implementations, the graphical user interface further includes: displaying a third GUI on the display in response to a touch event for the detection control, where the third GUI is used to display detection progress and information about a current detection channel.

With reference to the second aspect, in some possible implementations, the graphical user interface further includes a fourth GUI displayed on the display, where the fourth GUI is used to display first prompt information, and the first prompt information is used to prompt that the video surveillance device does not exist; or the fourth GUI is used to display second prompt information and a locating control, and the second prompt information is used to prompt that the video surveillance device exists, and the locating control is used to locate the video surveillance device.

With reference to the second aspect, in some possible implementations, the graphical user interface further includes: displaying a fifth GUI on the display in response to a touch event for the locating control, where the fifth GUI is used to display third prompt information and the locating control, and the third prompt information includes a locating description used to prompt a user to perform locating.

With reference to the second aspect, in some possible implementations, the graphical user interface further includes a sixth GUI displayed on the display, where the sixth GUI is used to display fourth prompt information, and the fourth prompt information is used to prompt a user to perform a guiding action of locating.

With reference to the second aspect, in some possible implementations, the graphical user interface further includes a seventh GUI displayed on the display, where the seventh GUI is used to display location information of the video surveillance device.

According to a third aspect, an apparatus is provided. The apparatus is included in an electronic device, and the apparatus has a function of implementing behavior of the electronic device in the foregoing aspects and the possible implementations of the foregoing aspects. The function may be implemented by hardware, or may be implemented by executing corresponding software by hardware. The hardware or the software includes one or more modules or units corresponding to the foregoing function.

According to a fourth aspect, an electronic device is provided, including one or more processors, a memory, one or more application programs, and one or more computer programs. The one or more computer programs are stored in the memory. The one or more computer programs include instructions. When the instructions are executed by the electronic device, the electronic device is enabled to perform the method for detecting a video surveillance device according to any one of the possible implementations of the first aspect.

According to a fifth aspect, a chip system is provided, including at least one processor. When program instructions are executed in the at least one processor, a function of the method for detecting a video surveillance device according to any one of the possible implementations of the first aspect on the electronic device is implemented.

According to a sixth aspect, a computer storage medium is provided, including computer instructions. When the computer instructions are run on an electronic device, the electronic device is enabled to perform the method for detecting a video surveillance device according to any one of the possible implementations of the first aspect.

According to a seventh aspect, a computer program product is provided. When the computer program product runs on an electronic device, the electronic device is enabled to perform the method for detecting a video surveillance device according to any one of the possible designs of the first aspect.

## BRIEF DESCRIPTION OF DRAWINGS

FIG. 1 is a schematic diagram of a hardware structure of an electronic device according to an embodiment of this application;

FIG. 2 is a schematic diagram of a software structure of an electronic device according to an embodiment of this application;

FIG. 3(a) to FIG. 3(j) are a schematic diagram of a group of GUIs according to an embodiment of this application;

FIG. 4(a) to FIG. 4(e) are a schematic diagram of another group of GUIs according to an embodiment of this application;

FIG. 5 is a schematic flowchart of detecting a video surveillance device according to an embodiment of this application;

FIG. 6 is a schematic flowchart of locating a video surveillance device according to an embodiment of this application;

FIG. 7 is a schematic diagram of a scenario of locating a video surveillance device according to an embodiment of this application;

FIG. 8(a) to FIG. 8(c) are a schematic diagram of a video traffic change in a process of locating a video surveillance device according to an embodiment of this application;

FIG. 9 is a schematic diagram of an intensity change of a light source of a detection device according to an embodiment of this application;

FIG. 10A and FIG. 10B are a schematic flowchart of a method for detecting a video surveillance device according to an embodiment of this application;

FIG. 11 is a schematic block diagram of another electronic device according to an embodiment of this application; and

FIG. 12 is a schematic block diagram of still another electronic device according to an embodiment of this application.

## DESCRIPTION OF EMBODIMENTS

Terms used in the following embodiments are merely intended to describe specific embodiments, but are not intended to limit this application. The terms "one", "a", "the", "the foregoing", "the", and "this" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B each may be singular or plural. The character "/" generally indicates an "or" relationship between associated objects.

Reference to "an embodiment", "some embodiments", or the like in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more such features.

Embodiments of this application provide a method for detecting a video surveillance device and an electronic device. The video surveillance device can be detected without adding an additional hardware module, and the video surveillance device can be detected without accessing a network in which the video surveillance device is located. This can improve comprehensiveness and accuracy of detecting the video surveillance device, thereby reducing occurrence of a user privacy infringement event.

The method for detecting a video surveillance device provided in embodiments of this application may be applied to an electronic device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

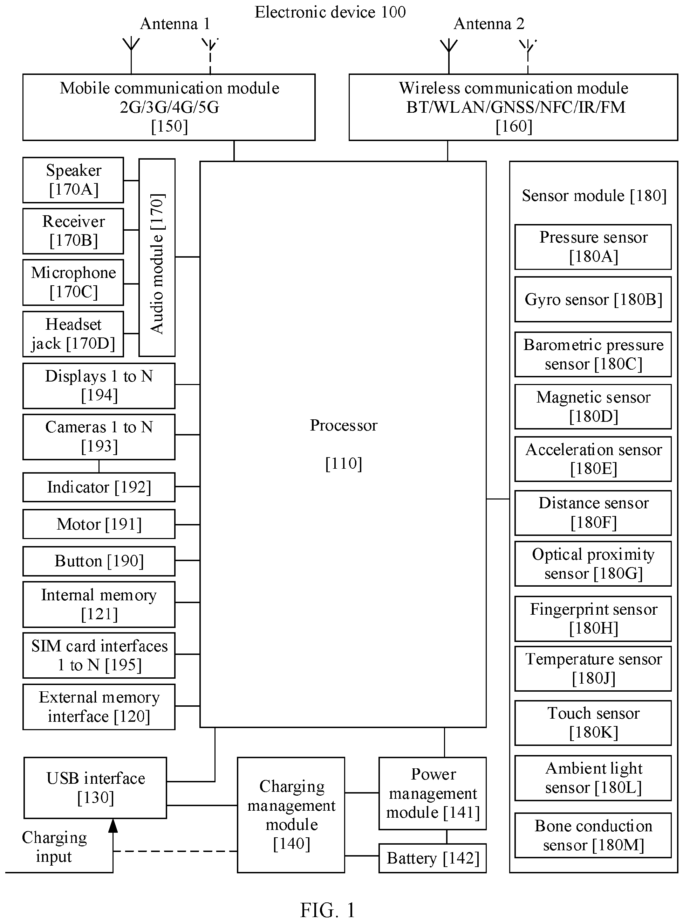

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the electronic device 101 may alternatively include one or more processors 110. The controller may generate an operation control signal based on instruction operation code and a time sequence signal, to complete control of instruction reading and instruction execution.

In some other embodiments, a memory may be further disposed in the processor 110, configured to store instructions and data, for example, configured to store a locating algorithm. For example, the memory in the processor 110 may be a cache. The memory may store instructions or data just used or cyclically used by the processor 110. If the processor 110 needs to use the instructions or the data again, the processor may directly invoke the instructions or the data from the memory. This avoids repeated access and reduces waiting time for the processor 110, thereby improving efficiency of processing data or executing instructions by the electronic device 101.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device. The USB interface 130 may alternatively be configured to connect to a headset, to play audio by using the headset.

It may be understood that an interface connection relationship between the modules illustrated in this embodiment of this application is merely an example for description, and constitutes no limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from a charger. The charger may be a wireless charger or a wired charger.

The power management module 141 is configured to connect the battery 142 and the charging management module 140 to the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization.

The mobile communication module 150 may provide a wireless communication solution that is applied to the electronic device 100 and that includes 2G/3G/4G/5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same device as at least some modules in the processor 110.

The wireless communication module 160 may provide a wireless communication solution that is applied to the electronic device 100 and that includes a wireless local area network (wireless local area network, WLAN) (such as a Wi-Fi network), Bluetooth (Bluetooth, BT), a global navigation satellite system (global navigation satellite system, GNSS), frequency modulation (frequency modulation, FM), near field communication (near field communication, NFC), an infrared technology (infrared, IR), and the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2. To obtain target traffic data, the target traffic data can be obtained by using a Wi-Fi network interface card carried in the electronic device. The Wi-Fi network interface card may be the wireless communication module 160.

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or more displays 194. For example, in a process of detecting a video surveillance device, the electronic device displays information about the video surveillance device on the display 194, and displays a location of the video surveillance device in a locating phase.

In some embodiments of this application, when the display panel is made of a material such as an OLED, an AMOLED, or an FLED, the display 194 in FIG. 1 may be bent. Herein, that the display 194 may be bent means that the display may be bent to any angle at any part and may be maintained at the angle.

The display 194 of the electronic device 100 may be a flexible screen. Currently, the flexible screen attracts much attention because of unique features and huge potential of the flexible screen. Compared with a conventional screen, the flexible screen has features of high flexibility and bendability, and can provide a user with a new bendability-based interaction mode, to satisfy more requirements of the user for the electronic device.

The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or more cameras 193.

The digital signal processor is configured to process a digital signal, and may process another digital signal in addition to a digital image signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 can be implemented by using the NPU, such as image recognition, facial recognition, speech recognition, and text understanding.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store one or more computer programs, and the one or more computer programs include instructions. The processor 110 may run the foregoing instructions stored in the internal memory 121, so that the electronic device 101 performs the volume control method provided in some embodiments of this application, various applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 101, and the like. In addition, the internal memory 121 may include a high-speed random access memory, or may further include a non-volatile memory, for example, one or more magnetic disk storage devices, a flash memory device, or a universal flash memory (universal flash storage, UFS). In some embodiments, the processor 110 may run the instructions stored in the internal memory 121 and/or the instructions stored in the memory that is disposed in the processor 110, so that the electronic device 101 performs the volume control method provided in embodiments of this application, other applications, and data processing. The electronic device 100 can implement an audio function, for example, a music playing function or a recording function, by using the audio module 170, the speaker 170A, the receiver 170B, the microphone 170C, the headset jack 170D, the application processor, and the like.

The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The ambient light sensor 180L is configured to sense ambient light luminance. For example, the electronic device may sense ambient light intensity in the locating phase. The electronic device 100 may adaptively adjust luminance of the display 194 based on the sensed ambient light luminance. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 1801.

The touch sensor 180K is also referred to as a "touch panel". The touch sensor 180K may be disposed on the display 194, and the touch sensor 180K and the display 194 constitute a touchscreen that is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may be alternatively disposed on a surface of the electronic device 100 at a location different from that of the display 194.

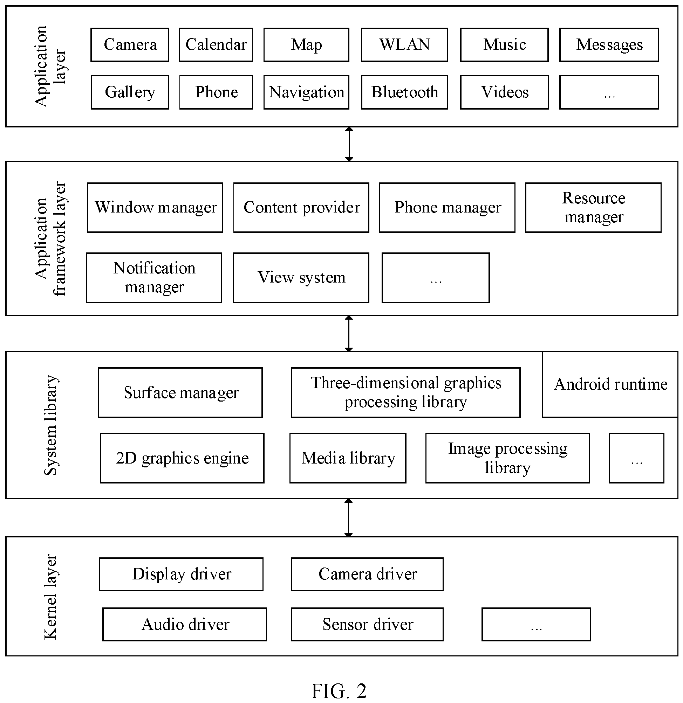

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Videos, and Messages. In this application, detection and locating of a video surveillance device can be implemented based on a WLAN.

The application package may also include an application program of a first application mentioned below.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is used to manage a window program. The window manager may obtain a size of a display, determine whether there is a status bar, lock a screen, take a screenshot, and the like.

The content provider is used to store and obtain data, and enable the data to be accessed by an application. The data may include a video, an image, audio, calls that are made and received, a browsing history, a bookmark, an address book, and the like.

The view system includes visual controls, such as a control for displaying a text and a control for displaying an image. The view system may be used to construct an application. A display interface may include one or more views. For example, a display interface including an SMS message notification icon may include a text display view and an image display view.

The phone manager is used to provide a communication function for the electronic device 100, for example, management of a call status (including answering, declining, or the like).

The resource manager provides various resources for an application, such as a localized character string, an icon, an image, a layout file, and a video file.

The notification manager enables an application to display notification information in a status bar, and may be used to convey a notification type message. The notification manager may automatically disappear after a short pause without requiring a user interaction, and may also interact with a user to proceed to a next step. In this application, the notification manager may notify the user of a message related to detection on a video surveillance device, and the like.

The notification manager may alternatively be a notification that appears in a top status bar of the system in a form of a graph or a scroll bar text, for example, a notification of an application running on a background or a notification that appears on the screen in a form of a dialog window. For example, text information is displayed in the status bar, an announcement is given, the electronic device vibrates, or an indicator light blinks.

The system library may include a plurality of function modules, for example, a surface manager (surface manager), a media library (media library), a three-dimensional graphics processing library (for example, OpenGL ES), and a 2D graphics engine (for example, SGL).

The surface manager is used to manage a display subsystem and provide fusion of 2D and 3D layers for a plurality of applications.

The media library supports playback and recording in a plurality of commonly used audio and video formats, a static image file, and the like. The media library may support a plurality of audio and video encoding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

For ease of understanding, in the following embodiments of this application, with reference to the accompanying drawings, the method for detecting a video surveillance device provided in embodiments of this application is specifically described by using a mobile phone having the structures shown in FIG. 1 and FIG. 2 as an example.

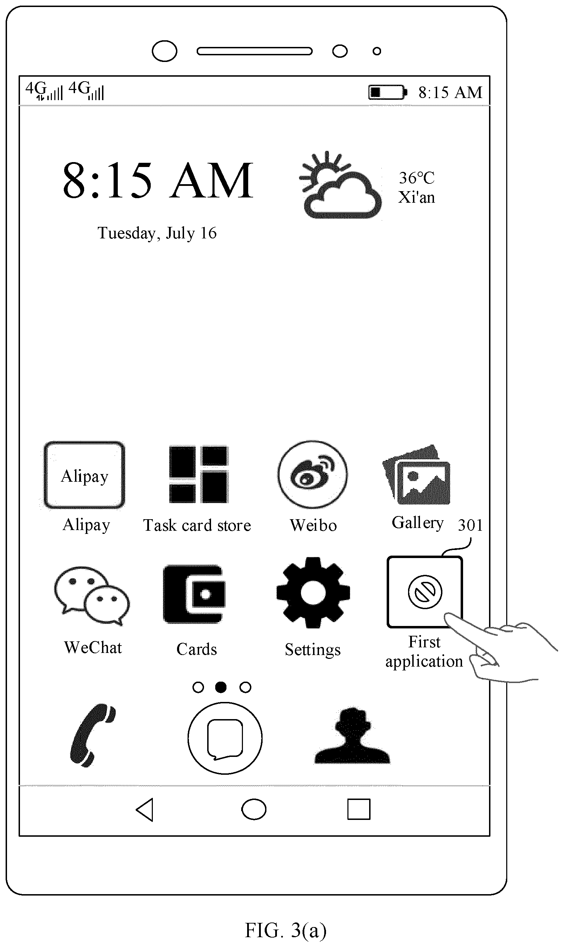

FIG. 3(a) to FIG. 3(j) show a group of GUIs of the mobile phone. FIG. 3(a) to FIG. 3(j) show that the mobile phone can detect, in a first application, whether a video surveillance device exists in a network space and a location of the video surveillance device.

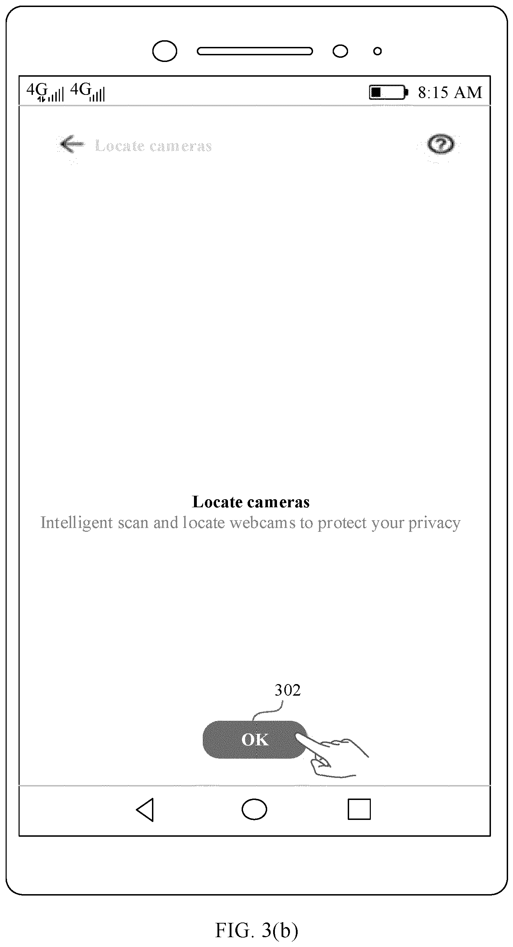

As shown in a GUI shown in FIG. 3(a), the GUI is a home screen of the mobile phone. After detecting an operation of tapping an icon 301 of the first application on the home screen by a user, the mobile phone may start a detection application, and display a GUI shown in FIG. 3(b). The GUI may be referred to as a detection interface.

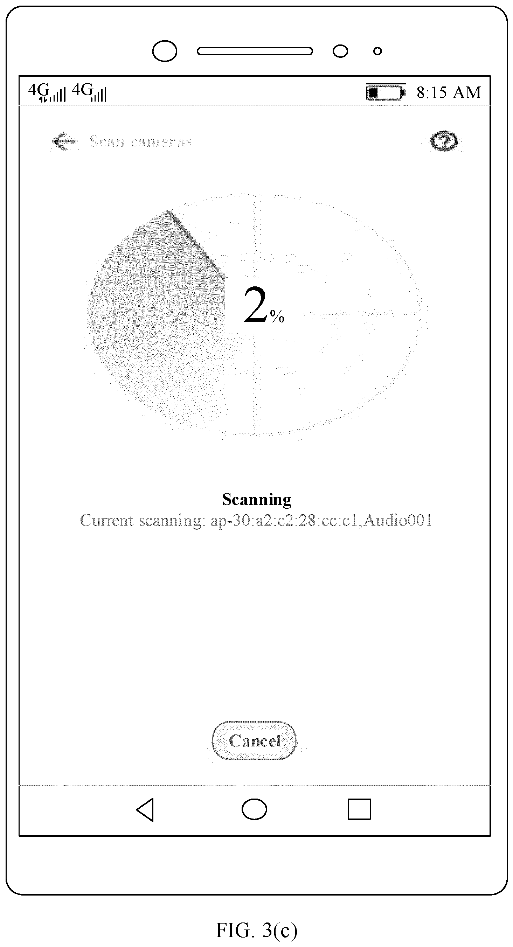

As shown in the GUI shown in FIG. 3(b), after the mobile phone detects an operation of tapping a known icon 302 by the user, the mobile phone may start to detect whether the video surveillance device exists in the network space, and display a GUI shown in FIG. 3(c).

As shown in the GUI shown in FIG. 3(c), the GUI is an interface on which the mobile phone is performing scanning. 2% shown in the figure indicates that detection progress of the mobile phone is 2% in this case. The figure may further include information about hotspots covered by the current detection channel.

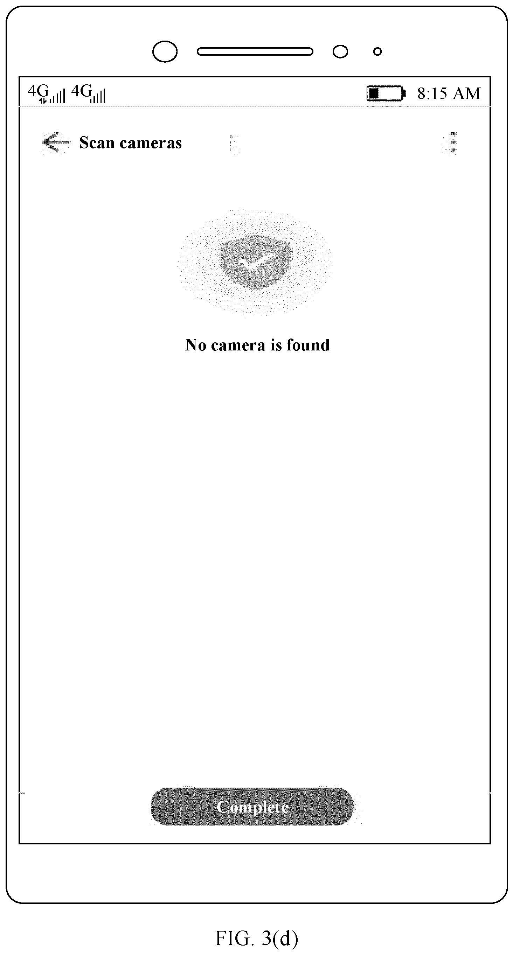

If the mobile phone detects that no video surveillance device exists in the network space after the detection progress is completed, "no camera is found" may be displayed in an interface of the mobile phone. Refer to a GUI shown in FIG. 3(d).

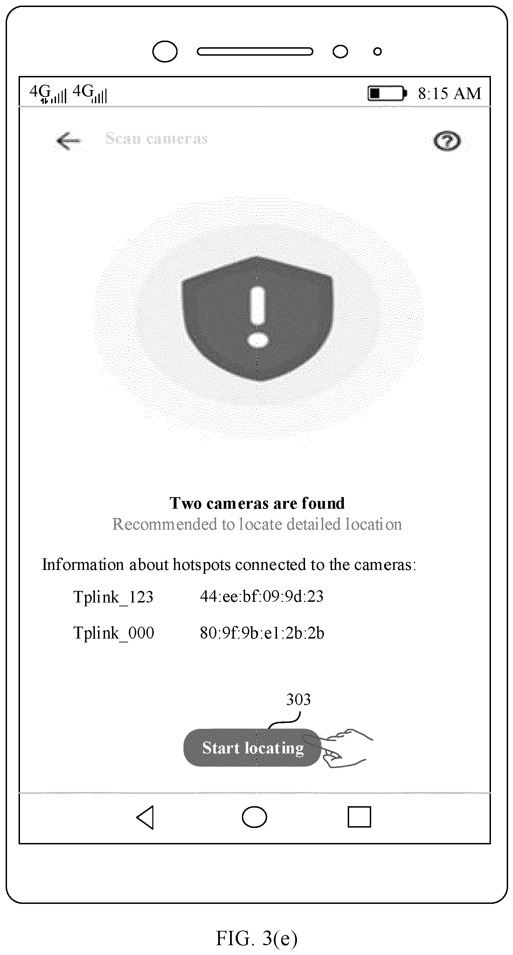

If the mobile phone detects that two video surveillance devices exist in the network space after the detection progress is completed, "two cameras are found" may be displayed in an interface of the mobile phone, and information about hotspots connected to the video surveillance devices (namely, the cameras) may be further displayed, for example, "TPlink_123" and corresponding MAC address information "44:ee:bf:09:9d:23", and "TPlink_000" and corresponding MAC address information " 80:9f:9b:e1:2b:2b" shown in FIG. 3(e). Then, the user starts locating of the video surveillance device based on a requirement. Refer to the GUI shown in FIG. 3(e).

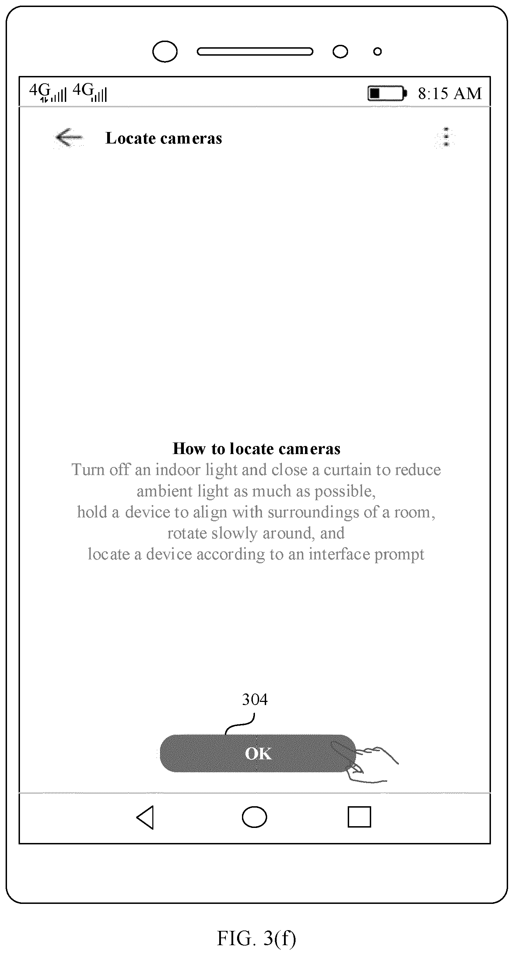

After the user taps an icon 303 for starting locating, the mobile phone may automatically turn on a flash, and a "locating description" may be displayed in an interface of the mobile phone. For example, the "locating description" may be: turn off an indoor light and close a curtain to reduce ambient light as much as possible, hold a device (namely, the mobile phone) to align with surroundings of a room, rotate slowly around, and locate the device based on an interface prompt. After it is ensured that the "locating description" is read and understood, an operation of tapping a known icon 304 may be performed. Refer to a GUI shown in FIG. 3(f).

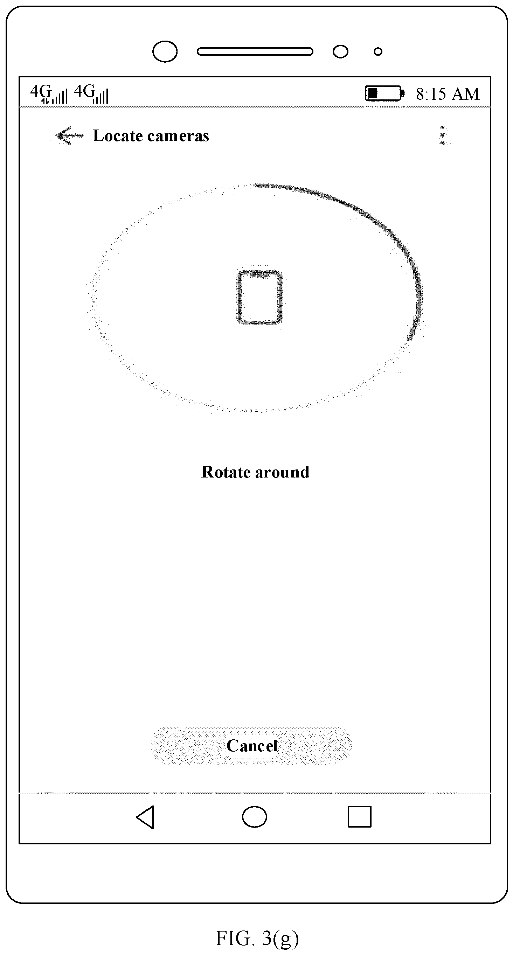

After the operation of tapping the known icon 304 by the user, an interface of the mobile phone may display "rotate around". The user may hold the mobile phone and rotate the mobile phone around. Refer to a GUI shown in FIG. 3(g).

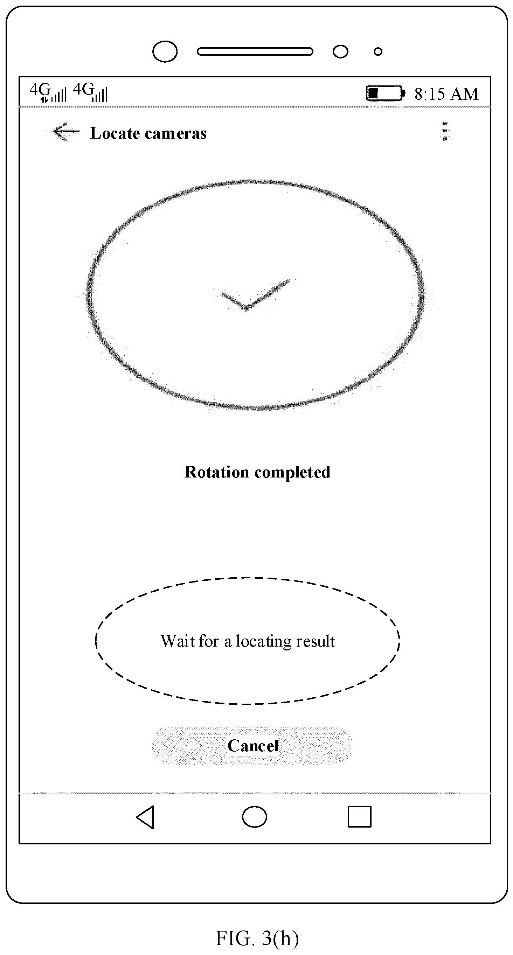

If the mobile phone has been rotated around, an interface of the mobile phone may display "rotation completed", and prompt the user "wait for a locating result". Refer to a GUI shown in FIG. 3(h).

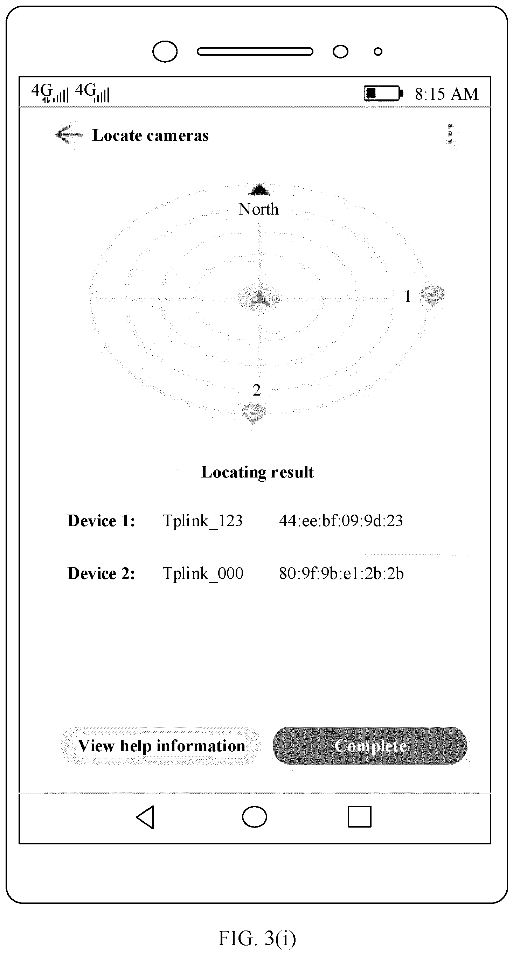

If video surveillance devices exist in the room, a locating result may be displayed. As shown in an interface shown in FIG. 3(i), it can be seen that locations of cameras are displayed above the "locating result", and names and MAC address information of the cameras are displayed below the "locating result" (namely, device 1: TPlink_123 44:ee:bf:09:9d:23, and device 2: TPlink_OOO 80:9f:9b:e1:2b:2b). The device 1 and the device 2 are respectively located on an east side and a south side of the user (when the user holds the mobile phone and locating is directed at the due north).

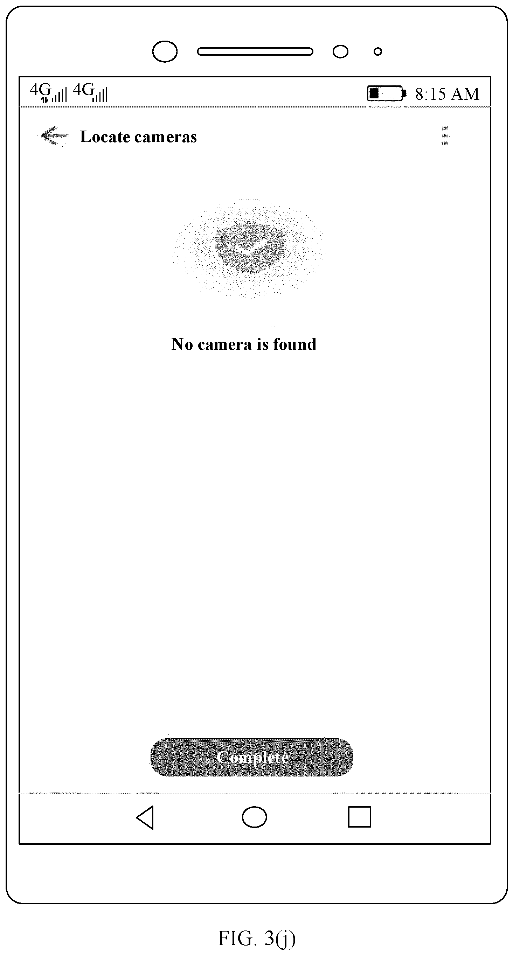

If there is no video surveillance device in the room, a locating result may be displayed. For example, in an interface shown in FIG. 3(j), a result of this time shows that no video surveillance device is located in the room.

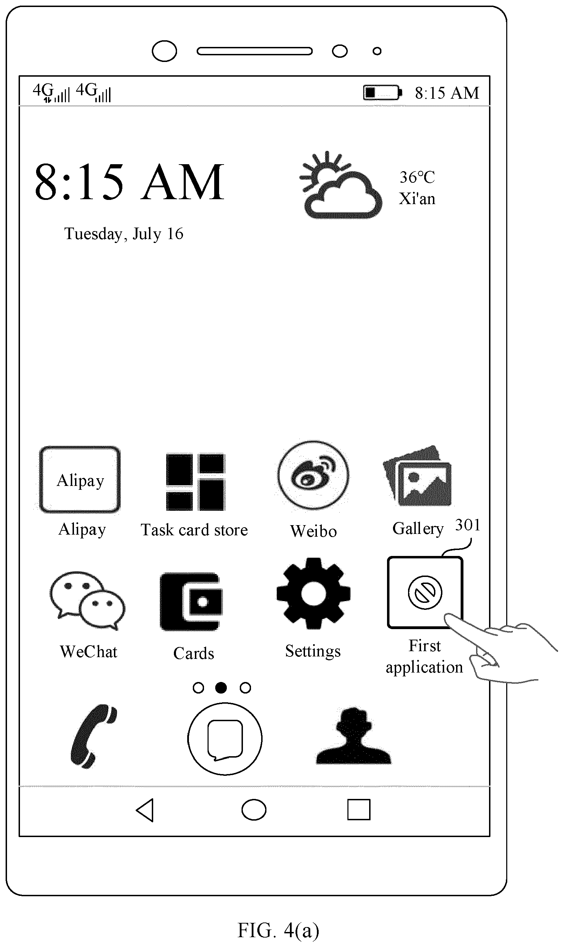

In some embodiments, in a process of detecting a video surveillance device, full scan and quick scan may alternatively be implemented by using different icons. FIG. 4(a) to FIG. 4(e) show another group of GUIs of the mobile phone. FIG. 4(a) to FIG. 4(e) show that the mobile phone can detect, in a first application, whether a video surveillance device exists in a network space.

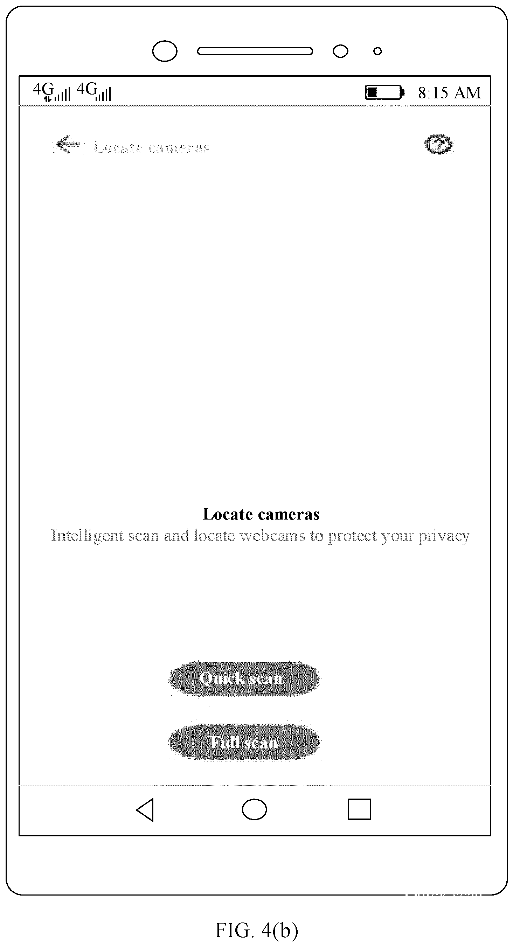

Similarly, as shown in a GUI shown in FIG. 4(a), the GUI is a home screen of the mobile phone. After detecting an operation of tapping an icon 301 of the first application on the home screen by a user, the mobile phone may start a detection application, and display a GUI shown in FIG. 4(b). The GUI may be referred to as a detection interface.

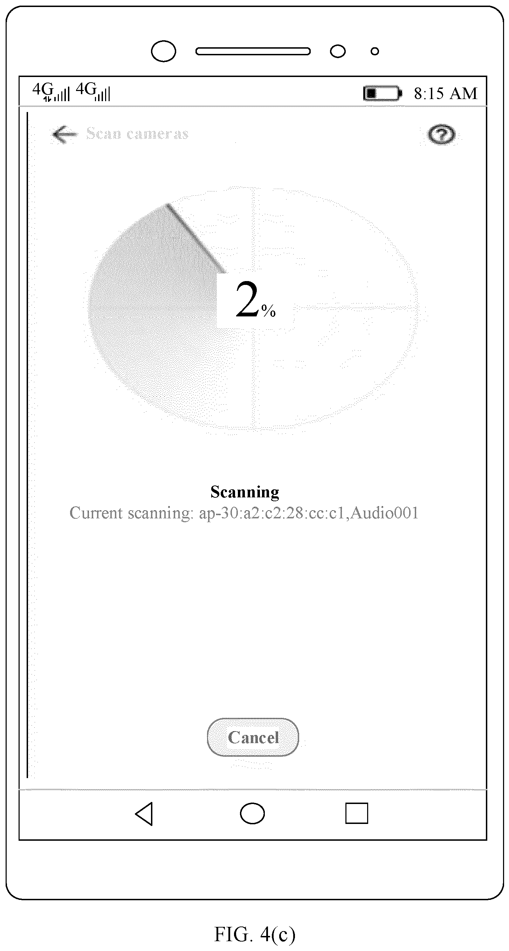

As shown in the GUI shown in FIG. 4(b), in this case, the user may select full scan or quick scan. Regardless of which manner the user selects to perform scanning, a GUI shown in FIG. 4(c) may be displayed.

A scanning manner can be selected inside the mobile phone, or may be selected by the user. This is not limited.

In an implementation, if the scanning manner is selected inside the mobile phone, the GUI shown in FIG. 4(b) is not displayed. After tapping the icon 301 of the first application on the home screen shown in FIG. 4(a), the user directly enters the GUI shown in FIG. 4(c). Quick scan or full scan can be selected in the foregoing mobile phone based on a value of a set signal strength threshold or whether a scanned wireless channel includes a channel of a 5G frequency band.

For example, if the signal strength threshold set in the mobile phone is larger, quick scan may be performed; or if the signal strength threshold set in the mobile phone is smaller, full scan may be performed. If the scanned wireless channel includes the channel of the 5G frequency band, full scan may be performed; or if the scanned wireless channel does not include the channel of the 5G frequency band, quick scan may be performed.

It should be understood that a larger or smaller channel strength threshold is of a relative concept. For example, signal strength -75 dBm is larger than signal strength -90 dBm, and is smaller than signal strength -50 dBm.

For example, it is assumed that there are 10 channels around. If the signal strength threshold set inside the mobile phone is larger, the mobile phone may scan only three channels, that is, perform quick scan. If the signal strength threshold set inside the mobile phone is smaller, the mobile phone may scan nine channels, that is, perform full scan.

Similarly, it is assumed that there are 10 channels around, where six channels belong to a 5 GHz frequency band, and four channels belong to other frequency bands. If the mobile phone is set to exclude a channel of the 5 GHz frequency band, the mobile phone scans the four channels of other frequency bands, that is, implements quick scan. If the mobile phone is set to include a channel of the 5 GHz frequency band, the mobile phone scans all the 10 channels (which include the six channels of the 5 GHz frequency band and the four channels of other frequency bands), that is, implements full scan.

In another implementation, if the user selects the scanning manner by itself, the user can select the scanning manner depending on an ambient environment.

For example, if the user enters a low-risk area such as a hotel lobby or a shopping mall, the user may select quick scan to perform general detection on the ambient environment; or if the user enters a high-risk area such as a hotel room, the user may select full scan to perform comprehensive detection on the room.

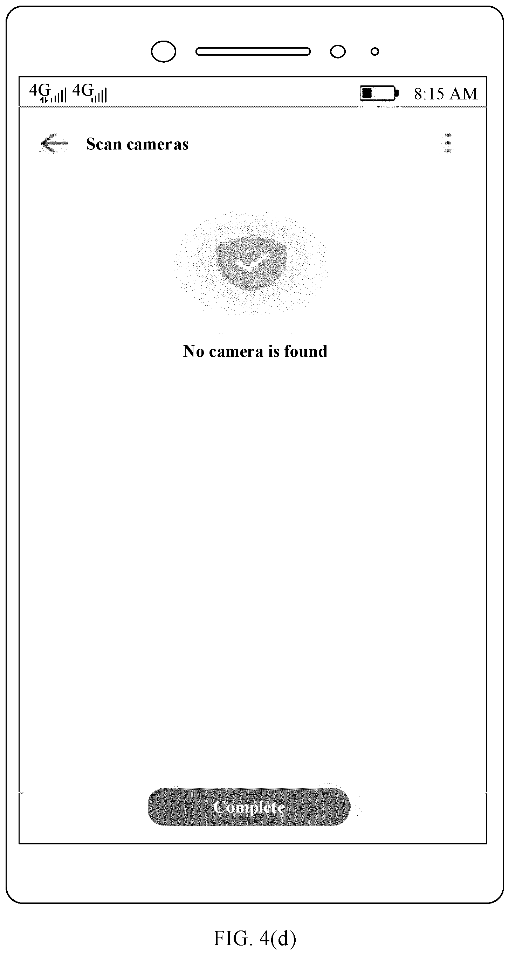

If the mobile phone detects that no video surveillance device exists in the network space, "no camera is found" may be displayed in an interface of the mobile phone. Refer to a GUI shown in FIG. 4(d).

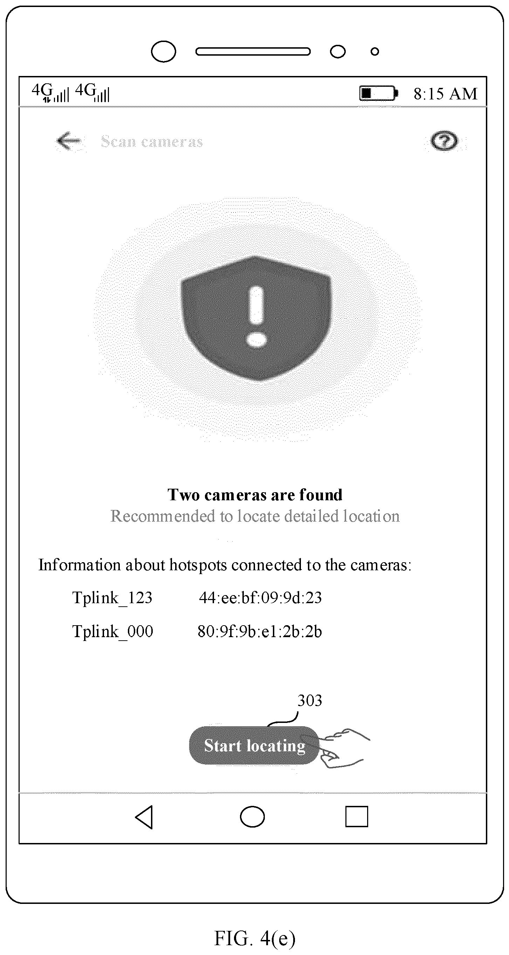

If the mobile phone detects that video surveillance devices exist in the network space, "two cameras are found" may be displayed in an interface of the mobile phone, and information about hotspots connected to the video surveillance devices (cameras) may be further displayed, for example, "TPlink_123" and corresponding MAC address information "44:ee:bf:09:9d:23", and "TPlink_000" and corresponding MAC address information "80:9f:9b:e1:2b:2b" that are shown in FIG. 4(e). In addition, an operation of starting locating 303 may be started. Refer to a GUI shown in FIG. 4(e).

After it is detected that the video surveillance device exists, for subsequent locating of the video surveillance device, refer to the interfaces shown in FIG. 3(f) to FIG. 3(j). For brevity, details are not described herein again.

It should be noted that, in the foregoing process, detection and locating of the video surveillance device may alternatively be implemented in a voice form. For example, if the mobile phone detects that the video surveillance device exists in the network space, the mobile phone may prompt, in a voice playing form, the user that the video surveillance device exists in the current network space, and prompt, in voice, the user to start locating; or if the mobile phone detects that no video surveillance device exists in the network space, the mobile phone may prompt, in a voice playing form, the user that no video surveillance device exists in the current network space. The process is basically the same as the process shown in FIG. 3(a) to FIG. 3(j), and only a form is different. For brevity, details are not described herein again.

This application may be applied to some places such as a restaurant or a hotel in which a user stays, and may be used to detect whether a video surveillance device exists in a network space in which the user is located, to reduce occurrence of a user privacy infringement event, so as to ensure privacy security of the user

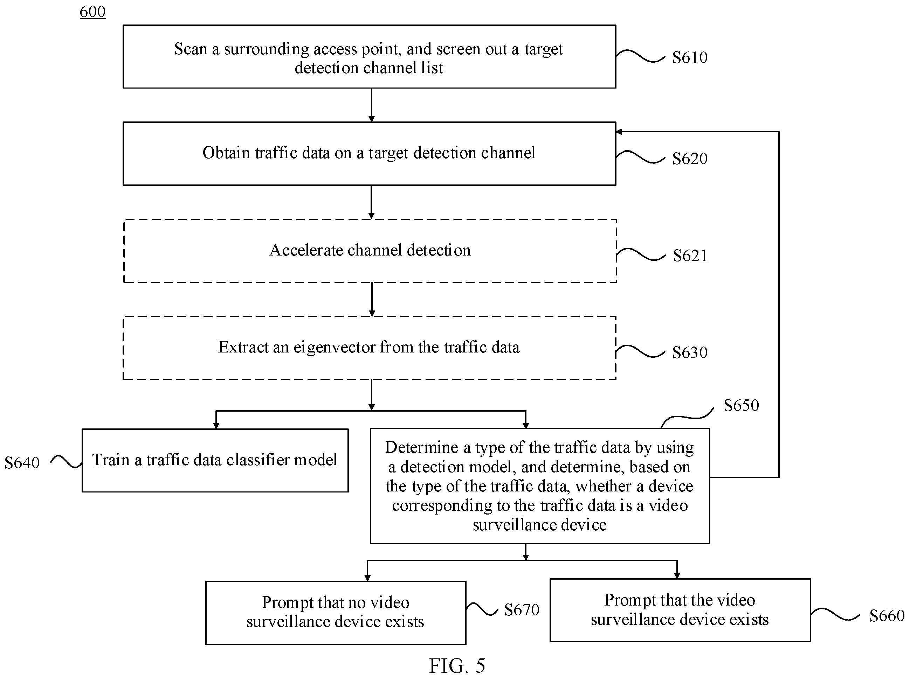

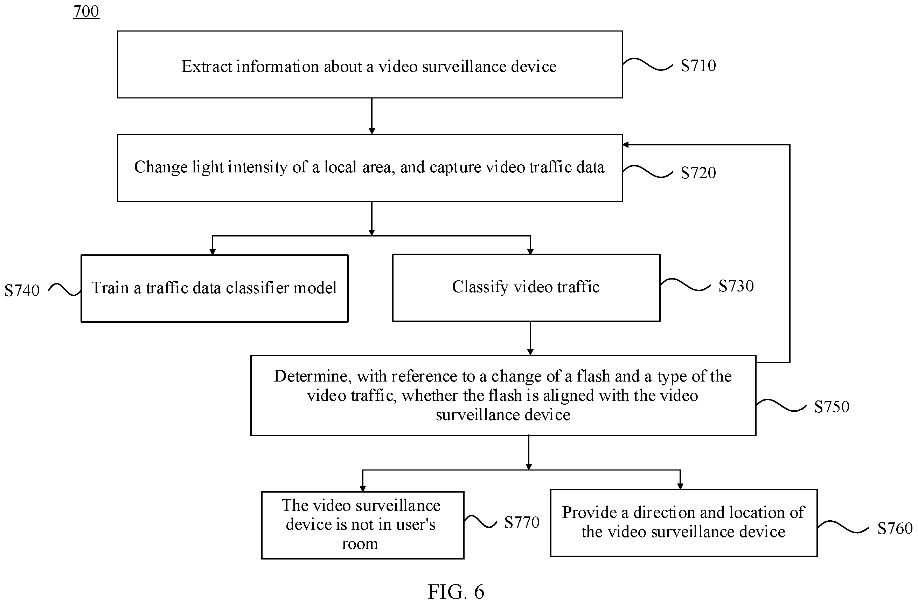

The following first describes, with reference to FIG. 5 and FIG. 6, a process of detecting and locating a video surveillance device by an electronic device in this application.

**Detecting process**

The following describes, with reference to FIG. 5, a process in which an electronic device (the following uses a detection device as an example) determines whether a video surveillance device exists in an embodiment of this application.

In this solution, the detection device with a sniffing capability captures Wi-Fi traffic data in an ambient environment and identifies traffic based on a detection model, to detect the video surveillance device.

S610: The detection device scans a surrounding access point, and screens out a target detection channel list.

After receiving a detection command, the detection device may start to scan information about an access point in the ambient environment. An Android system is used as an example, the detection device may invoke a Wi-Fi management class to obtain the information about the access point. The information that can be obtained may include an access point name, an access point MAC address, access point signal strength, an access point carrier frequency, a bandwidth, and the like.

After receiving the detection command, the detection device starts to scan the information about the access point in the ambient environment. The detection command may be a command delivered by a user by tapping a first application, or a command delivered after the detection device connects to a network in a place such as a restaurant or a hotel in which a user stays. This is not limited.

After obtaining the information about the access point in the ambient environment by scanning the surrounding access point, the detection device may screen out the target detection channel list from a scanning result (the obtained information about the access point in the ambient environment, namely, a target channel list), and may perform screening in the following two manners.

Manner 1: A channel with weaker signal strength may be removed from the target channel list of the detection device.

It may be understood that the channel with weaker signal strength is generally far away from a location of the detection device. Even if the video surveillance device exists, the video surveillance device may not be in a room where the user is located, and a risk is low. Therefore, the channel with weaker signal strength can be removed.

The channel with weaker signal strength is of a relative concept. In some embodiments, channels with weaker signal strength may be understood as channels whose signal strength ranks last five in a plurality of channels. For example, the detection device detects 10 channels, and the 10 channels are ranked as a channel 1, a channel 2, a channel 3, ..., a channel 9, and a channel 10 in descending order of signal strength. In this case, channels with weaker signal strength may be the channel 6 to the channel 10. Therefore, the five channels: the channel 6 to the channel 10, can be removed, to screen out a target detection channel list: the channel 1, the channel 2, the channel 3, the channel 4, and the channel 5.

In some other embodiments, the channel with weaker signal strength may be understood as a channel whose channel strength is less than a preset threshold. For example, it is assumed that the preset threshold is -75 dBm, the detection device detects 10 channels: a channel 1, a channel 2, a channel 3, ..., a channel 9, and a channel 10. Signal strength of the channel 2, signal strength of the channel 3, and signal strength of the channel 8 are all less than the preset threshold -75 dBm. In this case, the three channels: the channel 2, the channel 3, and the channel 8 can be removed, to screen out a target detection channel list: the channel 1, the channel 4, the channel 5, the channel 6, the channel 7, the channel 9, and the channel 10.

That the channel with weaker signal strength is removed in Manner 1 may be understood as follows: A signal strength threshold set inside the mobile phone is larger, and in a scanning process, a channel with stronger signal strength threshold can be scanned, and a channel with weaker signal strength is automatically removed. In other words, this manner can be applied to quick scan.

Manner 2: A channel of a 5 GHz frequency band may be removed from the target channel list of the detection device.

Generally, the video surveillance device may support a 2.4 GHz frequency band, and a few video surveillance devices support a 5 GHz frequency band. Therefore, the channel of the 5 GHz frequency band can be removed.

For example, the detection device detects 10 channels: a channel 1, a channel 2, a channel 3, ..., a channel 9, and a channel 10. The channel 2, the channel 5, the channel 6, and the channel 8 all support the 5 GHz frequency band. In this case, the four frequency bands: the channel 2, the channel 5, the channel 6, and the channel 8 can be removed, to screen out a target detection channel list: the channel 1, the channel 3, the channel 4, the channel 7, the channel 9, and the channel 10.

Similarly, that the channel of the 5 GHz frequency band is removed in Manner 2 may be understood as follows: If the channel of the 5 GHz frequency band is set inside the mobile phone, quick scan can be performed. In a scanning process, the mobile phone does not scan the channel of the 5 GHz frequency band, automatically removes the channel of the 5 GHz frequency band, and scans a channel other than the channel of the 5 GHz frequency band. In other words, this manner can also be applied to quick scan.

It should be noted that, in a process of screening out a target detection channel, the foregoing two manners may be used at the same time, or may be used independently. This is not specifically limited in this application.

If the foregoing two manners are used at the same time in the process of screening out the target detection channel, a channel may be removed in the following manner.

(1). A channel that needs to be removed jointly in the two manners may be removed. For example, if the three channels: the channel 2, the channel 3, and the channel 8, need to be removed in Manner 1, and the four frequency bands: the channel 2, the channel 5, the channel 6, and the channel 8, need to be removed in Manner 2, because the channel 2 and the channel 8 need to be removed in both manners, the channel 2 and the channel 8 can be removed.

(2). A channel that needs to be removed in the two manners may be removed. For example, if the three channels: the channel 2, the channel 3, and the channel 8, need to be removed in Manner 1, and the four frequency bands: the channel 2, the channel 5, the channel 6, and the channel 8, need to be removed in Manner 2, because the channel 2, the channel 3, the channel 5, the channel 6, and the channel 8 are channels that need to be removed in the two manners, the channel 2, the channel 3, the channel 5, the channel 6, and the channel 8 can be removed.

S620: Obtain traffic data on the target detection channel.

In a process of obtaining the traffic data on the target detection channel, a network interface card of the detection device needs to be first set to a "monitoring" mode, and the traffic data on the target detection channel is captured by the detection device with the sniffing capability.

It should be noted that, in a normal mode, a Wi-Fi module discards data that is not sent to the Wi-Fi module; and in the monitoring mode, the detection device reports all data received by the Wi-Fi module. This is the sniffing capability of the detection device.

The sniffing capability may be enabled and disabled by delivering a command code and a parameter by an application. For example, the application is the first application shown in FIG. 3(a). In some embodiments, to reduce power consumption of the detection device, the detection device can sequentially and automatically enable and disable the sniffing capability based on the screened target detection channel.

For example, it is assumed that the target detection channels screened out in the foregoing step S610 include the channel 1, the channel 2, the channel 3, the channel 4, and the channel 5, and the detection device may separately capture traffic data on the five channels in sequence. The captured traffic data may be cached in a memory of the detection device in real time, for example, cached in a random access memory (random access memory, RAM) of the detection device; or may be stored in a path of the detection device in a form of a packet after the capture is completed, for example, stored in an internal storage path of an application of the detection device, for example, stored in a read-only memory (read-only memory, ROM).

In some embodiments, if a quantity of bytes of traffic data captured by the detection device on a channel (for example, the foregoing channel 1) is less than a preset threshold, a subsequent procedure of detecting the traffic data on the channel can be skipped, a quantity of bytes of traffic data on a next channel is directly determined, and whether to skip a subsequent detection procedure is determined based on the quantity of the bytes of the traffic data captured on the next channel, that is, S621: Accelerate channel detection.

For example, for the channel 1, if a quantity of bytes of traffic data detected by the detection device within 5s is less than the preset threshold, subsequent detection steps S630 to S670 on the channel 1 may be skipped, and a quantity of bytes of traffic data on the channel 2 continues to be determined. If the quantity of the bytes of the traffic data on the channel 2 is greater than or equal to the preset threshold, S630 continues to be performed; or if the quantity of the bytes of the traffic data on the channel 2 is less than the preset threshold, subsequent detection steps S630 to S670 on the channel 2 may be skipped.

It should be noted that, S621 is optional. In some embodiments, after obtaining the traffic data on the target detection channel, the detection device may directly perform S630.

For the target detection channel on which the detection procedure is performed, after obtaining the traffic data on the target detection channel, the detection device may parse the traffic data, to extract MAC layer information from the traffic data. For example, the cached data in the memory or the packet data in the path can be parsed based on a Wi-Fi transmission protocol, so that the MAC layer information can be extracted from the traffic data.

The extracted MAC layer information may include but is not limited to a frame type, a frame size, a source address, a destination address, duration, and the like.

S630: Extract an eigenvector from the traffic data.

In this embodiment of this application, before the eigenvector is extracted from the traffic data, the traffic data on the target detection channel may be preprocessed based on parsed-out information. The preprocessing may include removing an unrelated data frame and performing traffic splitting on the traffic data.

The removing an unrelated data frame means removing frames of which types are not data frames, for example, a Wi-Fi management frame, a Wi-Fi control frame, and a retransmission frame. It should be noted that in the IEEE802.11 protocol, the Wi-Fi management frame is used to manage establishment of a Wi-Fi communication link, the Wi-Fi control frame is used to assist in transmission of a data frame, the retransmission frame is repeated transmission of a data frame, and a data frame carries service data of an upper-layer application. Subsequent identification on the video surveillance device is mainly completed by identifying surveillance video service data as a feature. For different services, a Wi-Fi management frame and a Wi-Fi control frame are the same, and a retransmission frame is related to a channel environment and is unrelated to a service. However, in this application, the video surveillance device is mainly identified by using different data. Therefore, for service identification, unrelated data frames are all "noise", and need to be removed.

The performing traffic splitting on the traffic data may be understood as splitting traffic data of different devices on each of a plurality of target detection channels. For example, traffic data of different devices on each target detection channel may be split based on a source MAC address and a destination MAC address of a data frame.

Specifically, it is assumed that the target detection channels screened out in the foregoing step S610 include the channel 1, the channel 2, the channel 3, the channel 4, and the channel 5, and traffic splitting may be performed on traffic data of different devices on the five channels in sequence. First, traffic splitting may be performed on the channel 1. If the channel 1 includes traffic data of three different devices, the traffic data of the three different devices may be split based on source addresses and destination addresses of the three different devices, to separately obtain the traffic data of the three devices. Similarly, a same manner may be used to perform traffic splitting on devices on another channel. For brevity, details are not described herein again.

In a specific implementation, after the traffic data on the target detection channel is preprocessed, an eigenvector may be extracted from preprocessed traffic data, the extracted eigenvector is input into a machine learning model, and whether a device corresponding to the detected channel is a video surveillance device is identified by using the machine learning model.

For example, an eigenvector may be manually designed and extracted by using expert experience. The extracted eigenvector includes but is not limited to a packet-length-related statistical feature (for example, a maximum value, a minimum value, an average value, a variance, and cumulative distribution of a packet length), a duration-related statistical feature, and an instantaneous traffic bandwidth.

In another specific implementation, after the traffic data on the target detection channel is preprocessed, preprocessed traffic data is input into a deep learning model, and whether a device corresponding to the detected channel is a video surveillance device is identified by using the deep learning model.

The deep learning model may be a recurrent neural network (recurrent neural network, RNN) model, a long short-term memory (long short-term memory, LSTM) artificial neural network model, or the like. It should be understood that the deep learning model in this embodiment of this application includes but is not limited to the foregoing two models, or may be another model. This is not limited.

It should be noted that S630 is an optional step. In some embodiments, if the detection model uses the deep learning model, S650 may alternatively be directly performed.

The machine learning model or the deep learning model may be obtained by performing model training by using collected positive sample traffic data and collected negative sample traffic data, that is, S640: Train a traffic data classifier model.

In some embodiments, the positive sample traffic data may be traffic data generated in working processes of different video surveillance devices. For the positive sample traffic data, traffic differences that may be caused by different factors, such as surveillance video image quality, surveillance video encoding and decoding schemes, and a video transmission protocol may be taken into account. The negative sample traffic data may be service traffic data generated by different non-video surveillance devices in daily lives, for example, in scenarios such as video live broadcast, online video play, online game, text download, and system update.

In some other embodiments, the positive sample traffic data may be service traffic data generated by different non-video surveillance devices in daily lives, for example, in scenarios such as video live broadcast, online video play, online game, text download, and system update. The negative sample traffic data may be traffic data generated in working processes of different video surveillance devices. Similarly, for the negative sample traffic data, traffic differences that may be caused by different factors, such as surveillance video image quality, surveillance video encoding and decoding schemes, and a video transmission protocol may be taken into account.

S650: Determine a type of the traffic data by using the detection model, and determine, based on the type of the traffic data, whether a device corresponding to the traffic data is a video surveillance device.

The detection model in this embodiment of this application may be the foregoing machine learning model or deep learning model.

In the detecting process of the video surveillance device, the foregoing eigenvector extracted from the traffic data or the traffic data may be input into a corresponding detection model, to identify the type of the traffic data, so as to identify whether a detected device is a video surveillance device.

(1) Model 1

If the corresponding detection model is a machine learning model, the positive sample traffic data may be traffic data generated in working processes of different video surveillance devices, and the negative sample traffic data may be service traffic data generated by different non-video surveillance devices in daily lives, identification may be performed in the following manner.

The preprocessed traffic data may be segmented into a plurality of groups of traffic samples, eigenvectors are respectively extracted from the plurality of groups of traffic samples, and are input into the machine learning model, to obtain confidence levels of a plurality of traffic samples, and whether the device is the video surveillance device is identified by using the confidence levels and a preset threshold.

① An average value of confidence levels of the plurality of groups of traffic samples may be calculated. If the average value of the confidence levels is greater than or equal to the preset threshold, it can be determined that a device corresponding to the traffic data is a video surveillance device; otherwise, a device is not a video surveillance device.

For example, it is assumed that the preset threshold is 0.5. If one piece of traffic data is segmented into 10 traffic samples, and confidence levels of the 10 traffic samples are 0.6, 0.8, 0.5, 0.2, 0.8, 0.4, 0.3, 0.8, 0.9 and 0.7 respectively, an average value of the confidence levels of the 10 traffic samples is 0.6, and the average value of the confidence levels is greater than the preset threshold 0.5. In this case, it can be determined that a device corresponding to the traffic data is a video surveillance device, that is, a video surveillance device exists in a current network space.

For example, it is assumed that the preset threshold is 0.5. If one piece of traffic data is segmented into 10 traffic samples, and confidence levels of the 10 traffic samples are 0.3, 0.1, 0.2, 0.2, 0.3, 0.4, 0.1, 0.1, 0.2 and 0.1 respectively, an average value of the confidence levels of the 10 traffic samples is 0.2, and the average value of the confidence levels is less than the preset threshold 0.5. In this case, it can be determined that a device corresponding to the traffic data is not a video surveillance device, that is, no video surveillance device exists in a current network space.

② Determining may be performed with reference to a confidence level of a single sample and the preset threshold. If a quantity of traffic samples whose confidence levels are greater than or equal to the preset threshold is greater than or equal to a quantity of traffic samples whose confidence levels are less than the preset threshold, it can be determined that a device corresponding to the traffic data is a video surveillance device; otherwise, a device is not a video surveillance device.

For example, it is assumed that the preset threshold is 0.5. If one piece of traffic data is segmented into 10 traffic samples, and confidence levels of the 10 traffic samples are 0.6, 0.8, 0.5, 0.2, 0.8, 0.4, 0.3, 0.8, 0.9 and 0.7 respectively, for the 10 traffic samples, there are seven traffic samples whose confidence levels are greater than or equal to the preset threshold 0.5, and there are three traffic samples whose confidence levels are less than the preset threshold 0.5. In other words, a quantity of the traffic samples whose confidence levels are greater than or equal to the preset threshold (namely, seven) is greater than a quantity of the traffic samples whose confidence levels are less than the preset threshold (namely, three). In this case, it can be determined that a device corresponding to the traffic data is a video surveillance device, that is, a video surveillance device exists in a current network space.

For example, it is assumed that the preset threshold is 0.5. If one piece of traffic data is segmented into 10 traffic samples, and confidence levels of the 10 traffic samples are 0.3, 0.1, 0.2, 0.2, 0.3, 0.4, 0.1, 0.1, 0.2 and 0.1 respectively, for the 10 traffic samples, there are 0 traffic samples whose confidence levels are greater than or equal to the preset threshold 0.5, and there are 10 traffic samples whose confidence levels are less than the preset threshold 0.5. In other words, a quantity of the traffic samples whose confidence levels are greater than or equal to the preset threshold (namely, 0) is less than a quantity of the traffic samples whose confidence levels are less than the preset threshold (namely, 10). In this case, it can be determined that a device corresponding to the traffic data is not a video surveillance device, that is, no video surveillance device exists in a current network space.

(2) Model 2

If the corresponding detection model is a machine learning model, the positive sample traffic data may be service traffic data generated by different non-video surveillance devices in daily lives, and the negative sample traffic data may be traffic data generated in working processes of different video surveillance devices, identification may be performed in the following manner.

The preprocessed traffic data may be segmented into a plurality of groups of traffic samples, eigenvectors are respectively extracted from the plurality of groups of traffic samples, and are input into the machine learning model, to obtain confidence levels of a plurality of traffic samples, and whether the device is the video surveillance device is identified by using the confidence levels and a preset threshold.

① An average value of confidence levels of the plurality of groups of traffic samples may be calculated. If the average value of the confidence levels is less than the preset threshold, it can be determined that a device corresponding to the traffic data is a video surveillance device; otherwise, a device is not a video surveillance device.

For example, it is assumed that the preset threshold is 0.5. If one piece of traffic data is segmented into 10 traffic samples, and confidence levels of the 10 traffic samples are 0.6, 0.8, 0.5, 0.2, 0.8, 0.4, 0.3, 0.8, 0.9 and 0.7 respectively, an average value of the confidence levels of the 10 traffic samples is 0.6, and the average value of the confidence levels is greater than the preset threshold 0.5. In this case, it can be determined that a device corresponding to the traffic data is not a video surveillance device, that is, no video surveillance device exists in a current network space.

For example, it is assumed that the preset threshold is 0.5. If one piece of traffic data is segmented into 10 traffic samples, and confidence levels of the 10 traffic samples are 0.3, 0.1, 0.2, 0.2, 0.3, 0.4, 0.1, 0.1, 0.2 and 0.1 respectively, an average value of the confidence levels of the 10 traffic samples is 0.2, and the average value of the confidence levels is less than the preset threshold 0.5. In this case, it can be determined that a device corresponding to the traffic data is a video surveillance device, that is, a video surveillance device exists in a current network space.

② Determining may be performed with reference to a confidence level of a single sample and the preset threshold. If a quantity of traffic samples whose confidence levels are less than the preset threshold is greater than or equal to a quantity of traffic samples whose confidence levels are greater than or equal to the preset threshold, it can be determined that a device corresponding to the traffic data is a video surveillance device; otherwise, a device is not a video surveillance device.

For example, it is assumed that the preset threshold is 0.5. If one piece of traffic data is segmented into 10 traffic samples, and confidence levels of the 10 traffic samples are 0.6, 0.8, 0.1, 0.2, 0.8, 0.4, 0.3, 0.8, 0.9 and 0.7 respectively, for the 10 traffic samples, there are four traffic samples whose confidence levels are less than the preset threshold 0.5, and there are six traffic samples whose confidence levels are greater than or equal to the preset threshold 0.5. In other words, a quantity of the traffic samples whose confidence levels are less than the preset threshold (namely, four) is less than a quantity of the traffic samples whose confidence levels are greater than or equal to the preset threshold (namely, six). In this case, it can be determined that a device corresponding to the traffic data is not a video surveillance device, that is, no video surveillance device exists in a current network space.

For example, it is assumed that the preset threshold is 0.5. If one piece of traffic data is segmented into 10 traffic samples, and confidence levels of the 10 traffic samples are 0.3, 0.1, 0.2, 0.2, 0.3, 0.4, 0.1, 0.1, 0.2 and 0.1 respectively, for the 10 traffic samples, there are 10 traffic samples whose confidence levels are less than the preset threshold 0.5, and there are 0 traffic samples whose confidence levels are greater than or equal to the preset threshold 0.5. In other words, a quantity of the traffic samples whose confidence levels are less than the preset threshold (namely, 10) is greater than a quantity of the traffic samples whose confidence levels are greater than or equal to the preset threshold (namely, 0). In this case, it can be determined that a device corresponding to the traffic data is a video surveillance device, that is, a video surveillance device exists in a current network space.

(3) Model 3

If the corresponding detection model is a deep learning model, the positive sample traffic data may be traffic data generated in working processes of different video surveillance devices, and the negative sample traffic data may be service traffic data generated by different non-video surveillance devices in daily lives.

When the detection model is the deep learning model, after the obtained traffic data is preprocessed, the preprocessed traffic data may be segmented into a plurality of groups of traffic samples, eigenvectors of the plurality of groups of traffic samples do not need to be extracted, and the traffic samples may be directly input into the deep learning model, to obtain confidence levels of the plurality of groups of traffic samples, and whether the device is a video surveillance device is identified by using the confidence levels and a preset threshold.

① An average value of the confidence levels of the plurality of groups of traffic samples may be calculated. If the average value of the confidence levels is greater than or equal to the preset threshold, it can be determined that a device corresponding to the traffic data is a video surveillance device; otherwise, a device is not a video surveillance device.

For example, it is assumed that the preset threshold is 0.5. If one piece of traffic data is segmented into 10 traffic samples, and confidence levels of the 10 traffic samples are 0.6, 0.8, 0.5, 0.2, 0.8, 0.4, 0.3, 0.8, 0.9 and 0.7 respectively, an average value of the confidence levels of the 10 traffic samples is 0.6, and the average value of the confidence levels is greater than the preset threshold 0.5. In this case, it can be determined that a device corresponding to the traffic data is a video surveillance device, that is, a video surveillance device exists in a current network space.

② Determining may be performed with reference to a confidence level of a single sample and the preset threshold. If a quantity of traffic samples whose confidence levels are greater than or equal to the preset threshold is greater than or equal to a quantity of traffic samples whose confidence levels are less than the preset threshold, it can be determined that a device corresponding to the traffic data is a video surveillance device; otherwise, a device is not a video surveillance device.

For example, it is assumed that the preset threshold is 0.5. If one piece of traffic data is segmented into 10 traffic samples, and confidence levels of the 10 traffic samples are 0.6, 0.8, 0.5, 0.2, 0.8, 0.4, 0.3, 0.8, 0.9 and 0.7 respectively, for the 10 traffic samples, there are seven traffic samples whose confidence levels are greater than or equal to the preset threshold 0.5, and there are three traffic samples whose confidence levels are less than the preset threshold 0.5. In other words, a quantity of the traffic samples whose confidence levels are greater than or equal to the preset threshold is greater than a quantity of the traffic samples whose confidence levels are less than the preset threshold. In this case, it can be determined that a device corresponding to the traffic data is a video surveillance device, that is, a video surveillance device exists in a current network space.

(4) Model 4

If the corresponding detection model is a deep learning model, the positive sample traffic data may be service traffic data generated by different non-video surveillance devices in daily lives, and the negative sample traffic data may be traffic data generated in working processes of different video surveillance devices.

Similarly, when the detection model is the deep learning model, after the obtained traffic data is preprocessed, the preprocessed traffic data may be segmented into a plurality of groups of traffic samples, eigenvectors of the plurality of groups of traffic samples do not need to be extracted, and the plurality of groups of traffic samples may be directly input into the deep learning model, to obtain confidence levels of the plurality of groups of traffic samples, and whether the device is a video surveillance device is identified by using the confidence levels and a preset threshold.

① An average value of the confidence levels of the plurality of groups of traffic samples may be calculated. If the average value of the confidence levels is less than the preset threshold, it can be determined that a device corresponding to the traffic data is a video surveillance device; otherwise, a device is not a video surveillance device.

For example, it is assumed that the preset threshold is 0.5. If one piece of traffic data is segmented into 10 traffic samples, and confidence levels of the 10 traffic samples are 0.6, 0.8, 0.5, 0.2, 0.8, 0.4, 0.3, 0.8, 0.9 and 0.7 respectively, an average value of the confidence levels of the 10 traffic samples is 0.6, and the average value of the confidence levels is greater than the preset threshold 0.5. In this case, it can be determined that a device corresponding to the traffic data is not a video surveillance device, that is, no video surveillance device exists in a current network space.

20 Determining may be performed with reference to a confidence level of a single sample and the preset threshold. If a quantity of traffic samples whose confidence levels are less than the preset threshold is greater than or equal to a quantity of traffic samples whose confidence levels are greater than or equal to the preset threshold, it can be determined that a device corresponding to the traffic data is a video surveillance device; otherwise, a device is not a video surveillance device.

For example, it is assumed that the preset threshold is 0.5. If one piece of traffic data is segmented into 10 traffic samples, and confidence levels of the 10 traffic samples are 0.6, 0.8, 0.1, 0.2, 0.8, 0.4, 0.3, 0.8, 0.9 and 0.7 respectively, for the 10 traffic samples, there are four traffic samples whose confidence levels are less than the preset threshold 0.5, and there are six traffic samples whose confidence levels are greater than or equal to the preset threshold 0.5. In other words, a quantity of the traffic samples whose confidence levels are less than the preset threshold (namely, four) is less than a quantity of the traffic samples whose confidence levels are greater than or equal to the preset threshold (namely, six). In this case, it can be determined that a device corresponding to the traffic data is not a video surveillance device, that is, no video surveillance device exists in a current network space.

It should be noted that the foregoing numeric value is merely an example for description, may alternatively be another numeric value, and should not be construed as a particular limitation on this application.

After the foregoing step S650 is performed, if it is determined that the video surveillance device exists, S660 is performed; or if no video surveillance device exists, S670 is performed.

S660: Prompt the user that the video surveillance device exists in the network space, where related information may be provided, for example, information about a Wi-Fi connected to the video surveillance device, and a device locating algorithm is enabled, as shown in the interface shown in FIG. 3(e) or FIG. 4(e).

S670: Prompt the user that no video surveillance device exists in the network space, as shown in the interface shown in FIG. 3(d) or FIG. 4(d).

**Locating process**

If it is detected, according to the foregoing steps S610 to S670, that the video surveillance device exists in the network space, the device locating algorithm may be started, to locate the video surveillance device.

Specifically, in an actual process of locating the video surveillance device, light intensity of a local detection area may be changed by using a light source of the detection device, and surveillance video traffic data is captured at the same time. The video traffic data is preprocessed and then input to a detection device locating model to determine a type of video traffic. The locating process of the video surveillance device is implemented with reference to a change form of the light source of the detection device and a change form of the type of the video traffic. A specific flowchart of locating the video surveillance device is shown in FIG. 6.

S710: Extract information about the video surveillance device.

S720: Change light intensity of a local area, and capture video traffic data.

Before the light intensity of the local area is changed, light intensity of an ambient environment may be reduced first. For example, the light intensity of the ambient environment may be reduced by using curtains of all surrounding windows, or when a light is turned on, the light is turned off to reduce the light intensity of the ambient environment, as described in the interface shown in FIG. 3(f).

The ambient light intensity in this embodiment of this application may be implemented by using a light sensor, for example, may be sensed by using the ambient light sensor 180L in the electronic device shown in FIG. 1. When the light intensity of the ambient environment is reduced for the first time but the ambient light sensor 180L senses that the ambient light intensity still does not meet a condition for capturing the video traffic data, the notification manager of the electronic device may indicate the user to reduce the light intensity of the ambient environment again, to meet the condition for capturing the video traffic data.

In this embodiment of this application, the light intensity of the local area may be changed by aligning a flash of the detection device with the local area. Specifically, the flash of the detection device may be controlled to be on and off periodically, the flash flashes quickly and periodically (for example, 20 Hz) in an on time window, and the flash is turned off in an off time window.

It should be noted that the flash of the detection device may be automatically turned on. For example, as shown in the GUI shown in FIG. 3(e), the flash may be turned on after the detection device detects that a video surveillance device exists in a current space and the user taps the icon 303 for starting locating.

It should be further noted that, in the on time window, the flash is not steady on, but flashes periodically. This is mainly to cooperate with a frame rate (about 20 fps) of a camera of the video surveillance device, and continuously change an image shot by the video surveillance device, to form more traffic data. In this way, a difference between data in the on time window and data in the off time window is greater.

When the light source of the detection device is controlled to change light intensity of a local environment, the video traffic data can be captured, parsed and preprocessed.

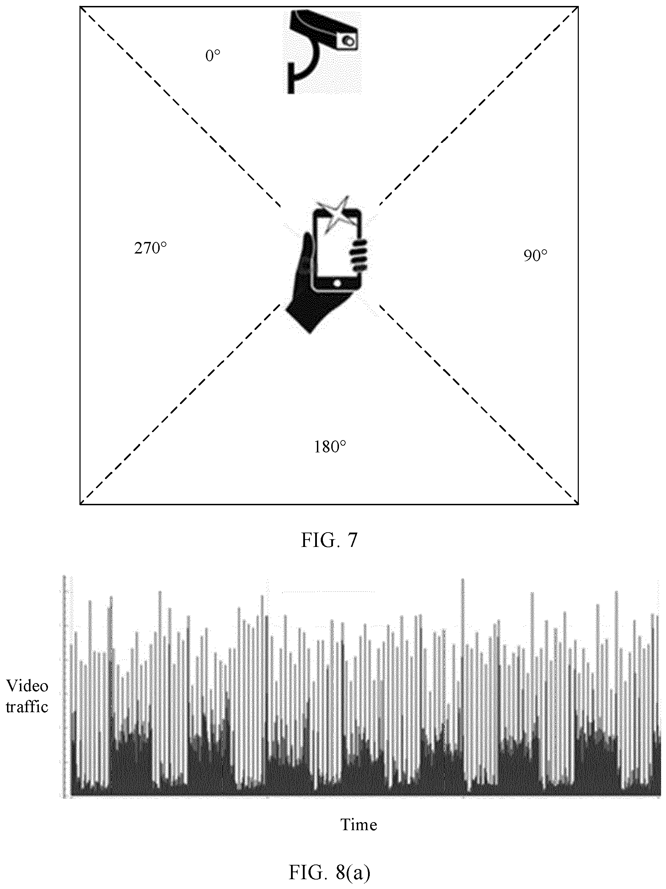

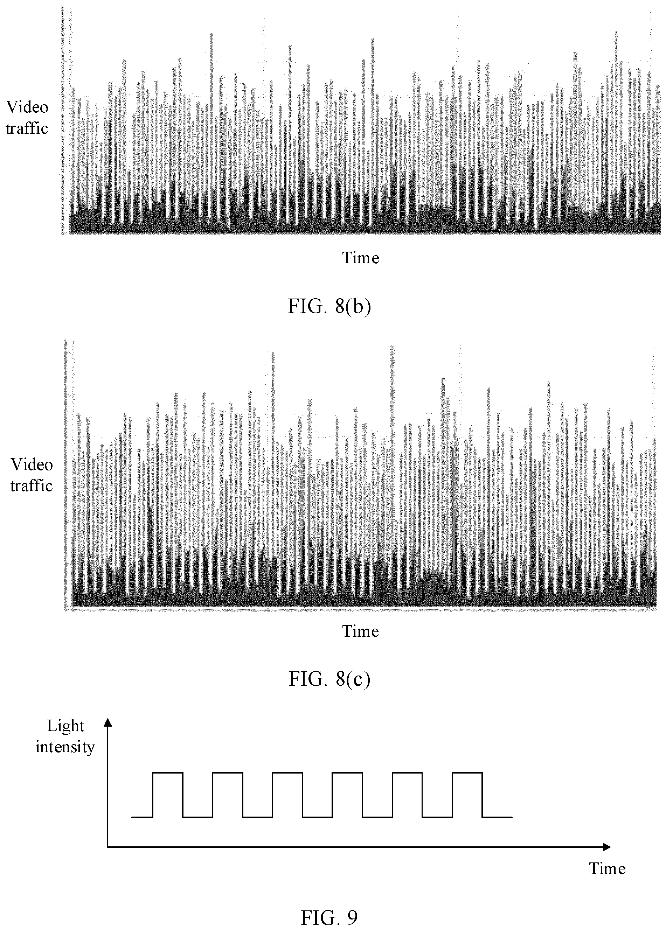

A locating scenario shown in FIG. 7 is used as an example for description. In the locating scenario shown in FIG. 7, there is a video surveillance device in a 0° direction (an area 1) with which a mobile phone (namely, a detection device) is aligned, and there is no video surveillance device in a 90° direction (an area 2), a 180° direction (an area 3), and a 270° direction (an area 4) with which the mobile phone is aligned. In the locating process of the video surveillance device, an intensity change of the light source of the detection device is shown in FIG. 9. When the area 1 is aligned, it can be learned that video traffic detected by the detection device changes greatly. As shown in FIG. 8(a), the video traffic varies greatly at different moments. This indicates that the video surveillance device responds to a change of the flash of the detection device in a direction of the area 1. Therefore, it can be determined that the video surveillance device exists in the direction of the area 1.

However, when the detection device is aligned with the area 2 or the area 3, detected video traffic basically remains unchanged. As shown in FIG. 8(b) and FIG. 8(c), the video traffic basically remains unchanged at different moments. This indicates that no video surveillance device responds to a change of the flash of the detection device in a direction of the area 2 or the area 3. Therefore, it can be determined that no video surveillance device exists in the direction of the area 2 or the area 3.

Similarly, the area 4 is the same as the area 2 or the area 3. For brevity, details are not described herein again.

In a specific implementation process, a user may first set a network interface card of the detection device to a "monitoring" mode, and traffic data on a target channel (the target channel is determined according to the foregoing steps S610 to S670, and the target channel may be all or some of the foregoing target detection channels) is captured by using a sniffing capability of the detection device. Similarly, the captured traffic data may be cached in a memory of the device in real time, or stored in a path of the device in a form of a packet after the capture is completed.

After obtaining the traffic data on the target channel, the detection device may parse the traffic data to extract MAC layer information from the traffic data. For example, the cached data in the memory or the packet data in the path can be parsed based on a Wi-Fi transmission protocol, so that the MAC layer information can be extracted from the traffic data.

The extracted MAC layer information may include but is not limited to a frame type, a frame size, a source address, a destination address, duration, and the like.

The foregoing preprocessing process of the traffic data may include removing an unrelated data frame and performing traffic splitting on the traffic data.

The removing an unrelated data frame means removing frames of which types are not data frames, for example, a Wi-Fi management frame, a Wi-Fi control frame, and a retransmission frame.

The performing traffic splitting on the traffic data may be understood as splitting traffic data of different devices on each of a plurality of target channels. For example, traffic data of different devices on the plurality of target channels may be split based on MAC addresses.

In a specific implementation, after the traffic data on the target channel is preprocessed, an eigenvector may be extracted from preprocessed traffic data, the extracted eigenvector is input into a machine learning model, and whether a video surveillance device is in a room where a user is located and a direction and location of the video surveillance device are identified by using the machine learning model.

For example, an eigenvector may be manually designed and extracted by using expert experience. The extracted eigenvector includes but is not limited to: a traffic rate discrete Fourier transform coefficient, a packet-length-related statistical feature (for example, a maximum value, a minimum value, an average value, a variance, cumulative distribution, a slope, and a kurtosis of a packet length), and a duration-related statistical feature.

In another specific implementation, preprocessed traffic data may be input into a deep learning model, and whether a video surveillance device is in a room where a user is located and a direction and location of the video surveillance device are identified by using the deep learning model.

The deep learning model may be an RNN model, an LSTM model, or the like. It should be understood that the deep learning model in this embodiment of this application includes but is not limited to the foregoing two models, or may be another model. This is not limited.

In addition, the machine learning model or the deep learning model may be obtained by performing model training by using collected positive sample traffic data and collected negative sample traffic data, that is, S740: Train a traffic data classifier model.

In some embodiments, the positive sample traffic data may be traffic data generated when the light source of the detection device is in an on time window and the light source of the detection device is aligned with a video surveillance device. The negative sample traffic data may be traffic data generated when the light source of the detection device is in an off time window or the light source of the detection device is not aligned with a video surveillance device.

In some other embodiments, the positive sample traffic data may be traffic data generated when the light source of the detection device is in an off time window or the light source of the detection device is not aligned with a video surveillance device. The negative sample traffic data may be traffic data generated when the light source of the detection device is in an on time window and the light source of the detection device is aligned with a video surveillance device.

S730: Classify video traffic.

S750: Determine, with reference to a change of the flash and a type of the video traffic, whether the flash is aligned with the video surveillance device.

After S750 is performed, if the flash is aligned with the video surveillance device, S760 is performed; or if the flash is not aligned with the video surveillance device, S770 is performed.

S760: Provide a direction and location of the video surveillance device, for example, the interface shown in FIG. 3(i).

S770: Prompt that the video surveillance device is not in the room where the user is located, as shown in the interface shown in FIG. 3(j).

In the locating process of the video surveillance device, the eigenvector extracted from the traffic data or the traffic data may be input into a corresponding locating model, to identify a type of the data traffic, so as to identify, with reference to a change of the type of the traffic and a change of the light source of the device, whether the video surveillance device is in the room where the user is located. If the video surveillance device is in the room, the direction and the location of the video surveillance device in the room are provided; or if the video surveillance device is not in the room, there is no video surveillance device in the room where the user is located.

Alternatively, a light source of the mobile phone may be first aligned with a direction, traffic data in the direction is obtained, and an eigenvector extracted from the traffic data or the traffic data is input into a corresponding locating model, to identify a type of the data traffic, so as to identify, with reference to a change of the type of the traffic and a change of the light source of the device, whether the video surveillance device is in the room where the user is located. If the video surveillance device is in the room, the direction and the location of the video surveillance device in the room are provided; or if the video surveillance device is not in the room, there is no video surveillance device in the room where the user is located. After the current direction is detected, the process continues in a next direction.

The locating model in this embodiment of this application may be the foregoing machine learning model or deep learning model.

(1) Model 1

If the corresponding locating model is a machine learning model, the positive sample traffic data is surveillance video traffic generated when the light source of the detection device is in the on time window and the light source of the detection device is aligned with the video surveillance device, and the negative sample traffic data may be video traffic generated when the light source of the detection device is in the off time window or the light source of the detection device is not aligned with the video surveillance device, identification may be performed in the following manner.

Traffic data of the electronic device in the on time window and the off time window may be separately obtained, and processed, preprocessed traffic data is segmented into a plurality of groups of traffic samples, eigenvectors of the plurality of groups of traffic samples are respectively extracted, and input into the machine learning model, to obtain confidence levels of the plurality of groups of traffic samples, a type of the data traffic is identified by using the confidence levels and a preset threshold, and a direction and location of a detected video surveillance device are identified with reference to a change of the type of the traffic and a change of the light source of the device.

① An average value of the confidence levels of the plurality of groups of traffic samples may be calculated. If the average value of the confidence levels is greater than or equal to the preset threshold, the type of the data traffic can be identified as a positive sample traffic data type. If the average value of the confidence levels is less than the preset threshold, the type of the data traffic can be identified as a negative sample traffic data type. Then the direction and the location of the detected video surveillance device are identified with reference to the change of the type of the traffic and the change of the light source of the device.

For example, it is assumed that the preset threshold is 0.5. One piece of traffic data obtained by the electronic device in an on time window of a period is segmented into 10 traffic samples, and confidence levels of the 10 traffic samples are respectively 0.6, 0.8, 0.5, 0.2, 0.8, 0.4, 0.3, 0.8, 0.9 and 0.7, an average value of the confidence levels of the 10 traffic samples is 0.6, and the average value of the confidence levels is greater than the preset threshold 0.5. In this case, it can be determined that a data type of the traffic data in the on time window is the positive sample traffic data type.

One piece of traffic data obtained by the electronic device in an off time window of a period is segmented into 10 traffic samples, and confidence levels of the 10 traffic samples are respectively 0.3, 0.1, 0.2, 0.2, 0.3, 0.4, 0.1, 0.1, 0.2 and 0.1, an average value of the confidence levels of the 10 traffic samples is 0.2, and the average value of the confidence levels is less than a preset threshold 0.5. In this case, it can be determined that a data type of the traffic data in the off time window is the negative sample traffic data type.

Similarly, traffic data that is in on time windows and off time windows of a plurality of periods and that is obtained by the electronic device is processed and determined, to obtain types in the on time windows and the off time windows of the plurality of periods.

It is assumed that the positive sample traffic data type is denoted as " 1", and the negative sample traffic data type is denoted as "0". If the types of the traffic data, obtained according to the foregoing identification methods, in the on time windows and the off time windows of the plurality of periods are both " 1" and "0", and the change of the light source of the electronic device is denoted as " 1" and "0", the direction and the location of the detected video surveillance device can be identified based on the change of the type of the traffic and the change of the light source of the device.

If a correlation coefficient between a first sequence formed by a type of traffic data of the detected video surveillance device and a second sequence formed when the light source of the electronic device in the on time window and the off time window is greater than or equal to a preset threshold, it can be identified that the video surveillance device is located in a direction corresponding to the light source. If the correlation coefficient is less than the preset threshold, it can be identified that the video surveillance device is not located in the direction corresponding to the light source. If the video surveillance device is not in any direction and location of the room, it is determined that the video surveillance device is not in the room where the user is located.

The correlation coefficient in this embodiment of this application may include but is not limited to the following correlation coefficients: a Pearson correlation coefficient, a Spearman correlation coefficient, and a Kendall correlation coefficient.

The Pearson correlation coefficient is used as an example, a correlation coefficient between two variables may be represented as follows:

$$\rho(X,Y)=\frac{\mathrm{cov}(X,Y)}{\sigma_X \bullet \sigma_Y}=\frac{E(X,Y)-E(X)E(Y)}{\sqrt{E(X^2)-E^2(X)}\bullet\sqrt{E(Y^2)-E^2(Y)}},$$

where

$\rho(X,Y)$ represents a correlation coefficient between X and Y, cov(X,Y) represents a covariance between X and Y, $\sigma_X$ and $\sigma_Y$ respectively represent standard deviations of X and Y, E(X,Y) represents mathematical expectations of X and Y, E(X) and E(Y) respectively represent mathematical expectations of X and Y, and E(X^2) and E(X^2) respectively represent mathematical expectations of X^2 and Y^2.

For example, it is assumed that the light source of the mobile phone is currently aligned with the due east direction. If a first sequence formed by types of traffic data, obtained according to the foregoing processes, of the video surveillance device in on time windows and off time windows of five periods is X= (1, 0, 1, 0, 1, 0, 1, 0, 1, 0), and a second sequence formed when the light source of the electronic device in the on time windows and the off time windows is Y= (1, 0, 1, 0, 1, 0, 1, 0, 1, 0), the correlation coefficient between X and Y is as follows:

$$\rho(X,Y)=\frac{\mathrm{cov}(X,Y)}{\sigma_X \bullet \sigma_Y}=\frac{E(X,Y)-E(X)E(Y)}{\sqrt{E(X^2)-E^2(X)}\bullet\sqrt{E(Y^2)-E^2(Y)}}.$$

$$=\frac{0.5-0.5\bullet 0.5}{\sqrt{0.25}\bullet\sqrt{0.25}}=1$$

Because the correlation coefficient between X and Y is 1, and is greater than the preset threshold 0.5, it can be identified that the video surveillance device is located in the direction with which the light source of the mobile phone is aligned, that is, the video surveillance device exists in the direction with which the light source of the mobile phone is aligned (namely, the due east direction), namely, the device 1 shown in FIG. 3(i).

For example, it is assumed that the light source of the mobile phone is aligned with the due north direction. If a first sequence formed by types of traffic data, obtained according to the foregoing processes, of the video surveillance device in on time windows and off time windows of five periods is X= (0, 0, 0, 0, 1, 0, 0, 0, 0, 0), and a second sequence formed when the light source of the electronic device in the on time windows and the off time windows is Y= (1, 0, 1, 0, 1, 0, 1, 0, 1, 0), the correlation coefficient between X and Y is as follows:

$$\rho\left(X,Y\right)=\frac{\text{cov}\left(X,Y\right)}{\sigma_X \bullet \sigma_Y}=\frac{E\left(X,Y\right)-E\left(X\right)E\left(Y\right)}{\sqrt{E\left(X^2\right)-E^2\left(X\right)} \bullet \sqrt{E\left(Y^2\right)-E^2\left(Y\right)}}$$

$$=\frac{0.1-0.1 \bullet 0.5}{\sqrt{0.09} \bullet \sqrt{0.25}}= 0.33$$

Because the correlation coefficient between X and Y is 0.33, and is less than the preset threshold 0.5, it can be identified that the video surveillance device is not located in the direction with which the light source of the mobile phone is aligned, that is, the video surveillance device does not exist in the direction with which the light source of the mobile phone is aligned (namely, the due north direction). As shown in FIG. 3(i), the video surveillance device is not detected in the due north direction.

② Determining may be performed with reference to a confidence level of a single sample and the preset threshold. If a quantity of traffic samples whose confidence levels are greater than or equal to the preset threshold in the on time window is greater than or equal to a quantity of traffic samples whose confidence levels are less than the preset threshold in the on time window, and a quantity of traffic samples whose confidence levels are greater than or equal to the preset threshold in the off time window is less than or equal to a quantity of traffic samples whose confidence levels are less than the preset threshold in the off time window, the type of the data traffic can be identified as the positive sample traffic data type. If a quantity of traffic samples whose confidence levels are greater than or equal to the preset threshold in the on time window is less than a quantity of traffic samples whose confidence levels are less than the preset threshold, and a quantity of traffic samples whose confidence levels are greater than or equal to the preset threshold in the off time window is less than or equal to a quantity of traffic samples whose confidence levels are less than the preset threshold in the off time window, the type of the data traffic can be identified as the negative sample traffic data type.

For example, it is assumed that the preset threshold is 0.5. One piece of traffic data obtained by the electronic device in an on time window of a period is segmented into 10 traffic samples, and confidence levels of the 10 traffic samples are 0.6, 0.8, 0.5, 0.2, 0.8, 0.4, 0.3, 0.8, 0.9 and 0.7 respectively. In this case, for the 10 traffic samples, there are seven traffic samples whose confidence levels are greater than or equal to the preset threshold 0.5, and there are three traffic samples whose confidence levels are less than the preset threshold 0.5. In other words, in the on time window, a quantity of the traffic samples whose confidence levels are greater than or equal to the preset threshold is greater than a quantity of the traffic samples whose confidence levels are less than the preset threshold. In addition, one piece of traffic data obtained by the electronic device in an off time window of the period is segmented into 10 traffic samples, and confidence levels of the 10 traffic samples are 0.3, 0.1, 0.2, 0.2, 0.3, 0.4, 0.1, 0.1, 0.2 and 0.1 respectively. In this case, for the 10 traffic samples, there are 10 traffic samples whose confidence levels are less than the preset threshold 0.5. In other words, in the off time window, a quantity of the traffic samples whose confidence levels are greater than or equal to the preset threshold is less than a quantity of the traffic samples whose confidence levels are less than the preset threshold. In this case, it can be determined that the data type of the traffic data in the on time window is the positive sample traffic data type.

For example, one piece of traffic data obtained by the electronic device in an on time window of another period is segmented into 10 traffic samples, and confidence levels of the 10 traffic samples are 0.1, 0.8, 0.1, 0.2, 0.8, 0.4, 0.3, 0.8, 0.3 and 0.7 respectively. In this case, for the 10 traffic samples, there are six traffic samples whose confidence levels are less than the preset threshold 0.5, and there are four traffic samples whose confidence levels are greater than or equal to the preset threshold 0.5. In other words, in the on time window, a quantity of the traffic samples whose confidence levels are greater than or equal to the preset threshold is less than a quantity of the traffic samples whose confidence levels are less than the preset threshold. In addition, one piece of traffic data obtained by the electronic device in an off time window of the period is segmented into 10 traffic samples, and confidence levels of the 10 traffic samples are 0.3, 0.1, 0.2, 0.2, 0.3, 0.4, 0.1, 0.1, 0.2 and 0.1 respectively. In this case, for the 10 traffic samples, there are 10 traffic samples whose confidence levels are less than the preset threshold 0.5. In other words, in the off time window, a quantity of the traffic samples whose confidence levels are greater than or equal to the preset threshold is less than a quantity of the traffic samples whose confidence levels are less than the preset threshold. In this case, it can be determined that the data type of the traffic data in the off time window is the negative sample traffic data type.

Similarly, traffic data that is in on time windows and off time windows of a plurality of periods and that is obtained by the electronic device is processed and determined, to obtain types in the on time windows and the off time windows of the plurality of periods.

It is assumed that the positive sample traffic data type is denoted as " 1", and the negative sample traffic data type is denoted as "0". If the types of the traffic data, obtained according to the foregoing identification methods, in the on time windows and the off time windows of the plurality of periods are both "1" and "0", and the change of the light source of the electronic device is denoted as " 1" and "0", the direction and the location of the detected video surveillance device can be identified based on the change of the type of the traffic and the change of the light source of the device.

If a correlation coefficient between a first sequence formed by a type of traffic data of the detected video surveillance device and a second sequence formed when the light source of the electronic device in the on time window and the off time window is greater than or equal to a preset threshold, it can be identified that the video surveillance device is located in a direction with which the light source is aligned. If the correlation coefficient is less than the preset threshold, it can be identified that the video surveillance device is not located in the direction with which the light source is aligned. If the video surveillance device is not in any direction and location of the room, it is determined that the video surveillance device is not in the room where the user is located.

For example, it is assumed that the light source of the mobile phone is aligned with the due south direction. If a first sequence formed by types of traffic data, obtained according to the foregoing processes, of the video surveillance device in on time windows and off time windows of five periods is X= (1, 0, 1, 0, 1, 0, 1, 0, 1, 0), and a second sequence formed when the light source of the electronic device in the on time windows and the off time windows is Y= (1, 0, 1, 0, 1, 0, 1, 0, 1, 0), the correlation coefficient between X and Y is as follows:

$$\rho\left(X,Y\right) = \frac{\mathrm{cov}\left(X,Y\right)}{\sigma_X \bullet \sigma_Y} = \frac{E\left(X,Y\right) - E\left(X\right)E\left(Y\right)}{\sqrt{E\left(X^2\right) - E^2\left(X\right)} \bullet \sqrt{E\left(Y^2\right) - E^2\left(Y\right)}}$$

$$= \frac{0.5 - 0.5 \bullet 0.5}{\sqrt{0.25} \bullet \sqrt{0.25}} = 1$$

Because the correlation coefficient between X and Y is 1, and is greater than the preset threshold 0.5, it can be identified that the video surveillance device is located in the direction with which the light source of the mobile phone is aligned, that is, the video surveillance device exists in the direction with which the light source of the mobile phone is aligned (namely, the due south direction), namely, the device 2 shown in FIG. 3(i).

For example, it is assumed that the light source of the mobile phone is aligned with the due west direction. If a first sequence formed by types of traffic data, obtained according to the foregoing processes, of the video surveillance device in on time windows and off time windows of five periods is X= (0, 0, 0, 0, 1, 0, 0, 0, 0, 0), and a second sequence formed when the light source of the electronic device in the on time windows and the off time windows is Y= (1, 0, 1, 0, 1, 0, 1, 0, 1, 0), the correlation coefficient between X and Y is as follows:

$$\rho\left(X,Y\right) = \frac{\mathrm{cov}\left(X,Y\right)}{\sigma_X \bullet \sigma_Y} = \frac{E\left(X,Y\right) - E\left(X\right)E\left(Y\right)}{\sqrt{E\left(X^2\right) - E^2\left(X\right)} \bullet \sqrt{E\left(Y^2\right) - E^2\left(Y\right)}}$$

$$= \frac{0.1 - 0.1 \bullet 0.5}{\sqrt{0.09} \bullet \sqrt{0.25}} = 0.33$$

Because the correlation coefficient between X and Y is 0.33, and is less than the preset threshold 0.5, it can be identified that the video surveillance device is not located in the direction with which the light source of the mobile phone is aligned, that is, the video surveillance device does not exist in the direction with which the light source of the mobile phone is aligned (namely, the due west direction). As shown in FIG. 3(i), the video surveillance device is not detected in the due west direction.

(2) Model 2

If the corresponding detection model is a machine learning model, the positive sample traffic data may be video traffic generated when the light source of the detection device is in the off time window or the light source of the detection device is not aligned with the video surveillance device, and the negative sample traffic data may be surveillance video traffic generated when the light source of the detection device is in the on time window and the light source of the detection device is aligned with the video surveillance device.

Traffic data of the electronic device in the on time window and the off time window may be separately obtained, and processed, preprocessed traffic data is segmented into a plurality of groups of traffic samples, eigenvectors of the plurality of groups of traffic samples are respectively extracted, and input into the machine learning model, to obtain confidence levels of the plurality of groups of traffic samples, a type of the data traffic is identified by using the confidence levels and a preset threshold, and a direction and location of a detected video surveillance device are identified with reference to a change of the type of the traffic and a change of the light source of the device.

① An average value of the confidence levels of the plurality of groups of traffic samples may be calculated. If the average value of the confidence levels is less than the preset threshold, the type of the data traffic can be identified as a positive sample traffic data type. If the average value of the confidence levels is greater than or equal to the preset threshold, the type of the data traffic can be identified as a negative sample traffic data type. Then the direction and the location of the detected video surveillance device are identified with reference to the change of the type of the traffic and the change of the light source of the device.

For example, it is assumed that the preset threshold is 0.5. One piece of traffic data obtained by the electronic device in an on time window of a period is segmented into 10 traffic samples, and confidence levels of the 10 traffic samples are respectively 0.6, 0.8, 0.5, 0.2, 0.8, 0.4, 0.3, 0.8, 0.9 and 0.7, an average value of the confidence levels of the 10 traffic samples is 0.6, and the average value of the confidence levels is greater than the preset threshold 0.5. In this case, it can be determined that a data type of the traffic data in the on time window is of negative sample traffic data.
One piece of traffic data obtained by the electronic device in an off time window of a period is segmented into 10 traffic samples, and confidence levels of the 10 traffic samples are respectively 0.3, 0.1, 0.2, 0.2, 0.3, 0.4, 0.1, 0.1, 0.2 and 0.1, an average value of the confidence levels of the 10 traffic samples is 0.2, and the average value of the confidence levels is less than a preset threshold 0.5. In this case, it can be determined that a data type of the traffic data in the off time window is the positive sample traffic data type.
Similarly, traffic data that is in on time windows and off time windows of a plurality of periods and that is obtained by the electronic device is processed and determined, to obtain types in the on time windows and the off time windows of the plurality of periods.
It is assumed that the positive sample traffic data type is denoted as " 1", and the negative sample traffic data type is denoted as "0". If the types of the traffic data, obtained according to the foregoing identification methods, in the on time windows and the off time windows of the plurality of periods are both " 1" and "0", and the change of the light source of the electronic device is denoted as " 1" and "0", the direction and the location of the detected video surveillance device can be identified based on the change of the type of the traffic and the change of the light source of the device.
If a correlation coefficient between a first sequence formed by a type of traffic data of the detected video surveillance device and a second sequence formed when the light source of the electronic device in the on time window and the off time window is greater than or equal to a preset threshold, it can be identified that the video surveillance device is located in a direction corresponding to the light source. If the correlation coefficient is less than the preset threshold, it can be identified that the video surveillance device is not located in the direction corresponding to the light source. If the video surveillance device is not in any direction and location of the room, it is determined that the video surveillance device is not in the room where the user is located.
For example, it is assumed that the light source of the mobile phone is currently aligned with the due east direction. If a first sequence formed by types of traffic data, obtained according to the foregoing processes, of the video surveillance device in on time windows and off time windows of five periods is X= (1, 0, 1, 0, 1, 0, 1, 0, 1, 0), and a second sequence formed when the light source of the electronic device in the on time windows and the off time windows is Y= (1, 0, 1, 0, 1, 0, 1, 0, 1, 0), the correlation coefficient between X and Y is as follows:

$$\rho(X,Y)=\frac{\text{cov}(X,Y)}{\sigma_X \bullet \sigma_Y}=\frac{E(X,Y)-E(X)E(Y)}{\sqrt{E(X^2)-E^2(X)} \bullet \sqrt{E(Y^2)-E^2(Y)}}$$

$$=\frac{0.5-0.5 \bullet 0.5}{\sqrt{0.25} \bullet \sqrt{0.25}}=1$$

Because the correlation coefficient between X and Y is 1, and is greater than the preset threshold 0.5, it can be identified that the video surveillance device is located in the direction with which the light source of the mobile phone is aligned, that is, the video surveillance device exists in the direction with which the light source of the mobile phone is aligned (namely, the due east direction), namely, the device 1 shown in FIG. 3(i).

② Determining may be performed with reference to a confidence level of a single sample and the preset threshold. If a quantity of traffic samples whose confidence levels are greater than or equal to the preset threshold in the on time window is greater than or equal to a quantity of traffic samples whose confidence levels are less than the preset threshold, and a quantity of traffic samples whose confidence levels are greater than or equal to the preset threshold in the off time window is greater than or equal to a quantity of traffic samples whose confidence levels are less than the preset threshold in the off time window, the type of the data traffic can be identified as the positive sample traffic data type. If a quantity of traffic samples whose confidence levels are greater than or equal to the preset threshold in the on time window is less than a quantity of traffic samples whose confidence levels are less than the preset threshold, and a quantity of traffic samples whose confidence levels are greater than or equal to the preset threshold in the off time window is greater than or equal to a quantity of traffic samples whose confidence levels are less than the preset threshold in the off time window, the type of the data traffic can be identified as the negative sample traffic data type.

For example, it is assumed that the preset threshold is 0.5. One piece of traffic data obtained by the electronic device in an on time window of a period is segmented into 10 traffic samples, and confidence levels of the 10 traffic samples are 0.6, 0.8, 0.1, 0.2, 0.8, 0.4, 0.3, 0.8, 0.9 and 0.7 respectively. In this case, for the 10 traffic samples, there are four traffic samples whose confidence levels are less than the preset threshold 0.5, and there are six traffic samples whose confidence levels are greater than or equal to the preset threshold 0.5. In other words, in the on time window, a quantity of the traffic samples whose confidence levels are greater than or equal to the preset threshold is greater than a quantity of the traffic samples whose confidence levels are less than the preset threshold. In addition, one piece of traffic data obtained by the electronic device in an off time window of the period is segmented into 10 traffic samples, and confidence levels of the 10 traffic samples is 0.3, 0.5, 0.5, 0.2, 0.8, 0.4, 0.3, 0.8, 0.9 and 0.7 respectively. In this case, for the 10 traffic samples, there are six traffic samples whose confidence levels are greater than or equal to the preset threshold 0.5, and there are four traffic samples whose confidence levels are less than the preset threshold 0.5. In other words, in the off time window, a quantity of the traffic samples whose confidence levels are greater than or equal to the preset threshold is greater than a quantity of the traffic samples whose confidence levels are less than the preset threshold. In this case, it can be determined that the data type of the traffic data in the on time window is the positive sample traffic data type.

For example, one piece of traffic data obtained by the electronic device in an on time window of another period is segmented into 10 traffic samples, and confidence levels of the 10 traffic samples are 0.6, 0.1, 0.3, 0.2, 0.4, 0.4, 0.3, 0.8, 0.2 and 0.7 respectively. In this case, for the 10 traffic samples, there are seven traffic samples whose confidence levels are less than a preset threshold 0.5, and there are three traffic samples whose confidence levels are greater than or equal to the preset threshold 0.5. In other words, in the on time window, a quantity of the traffic samples whose confidence levels are greater than or equal to the preset threshold is less than a quantity of the traffic samples whose confidence levels are less than the preset threshold. In addition, one piece of traffic data obtained by the electronic device in an off time window of the period is segmented into 10 traffic samples, and confidence levels of the 10 traffic samples are 0.3, 0.5, 0.5, 0.2, 0.8, 0.4, 0.3, 0.8, 0.9 and 0.7 respectively. In this case, for the 10 traffic samples, there are six traffic samples whose confidence levels are greater than or equal to the preset threshold 0.5, and there are four traffic samples whose confidence levels are less than the preset threshold 0.5. In other words, in the off time window, a quantity of the traffic samples whose confidence levels are greater than or equal to the preset threshold is greater than a quantity of the traffic samples whose confidence levels are less than the preset threshold. In this case, it can be determined that the data type of the traffic data in the off time window is the negative sample traffic data type.

Similarly, traffic data that is in on time windows and off time windows of a plurality of periods and that is obtained by the electronic device is processed and determined, to obtain types in the on time windows and the off time windows of the plurality of periods.

It is assumed that the positive sample traffic data type is denoted as " 1", and the negative sample traffic data type is denoted as "0". If the types of the traffic data, obtained according to the foregoing identification methods, in the on time windows and the off time windows of the plurality of periods are both " 1" and "0", and the change of the light source of the electronic device is denoted as " 1" and "0", the direction and the location of the detected video surveillance device can be identified based on the change of the type of the traffic and the change of the light source of the device.

If a correlation coefficient between a first sequence formed by a type of traffic data of the detected video surveillance device and a second sequence formed when the light source of the electronic device in the on time window and the off time window is greater than or equal to a preset threshold, it can be identified that the video surveillance device is located in a direction with which the light source is aligned. If the correlation coefficient is less than the preset threshold, it can be identified that the video surveillance device is not located in the direction with which the light source is aligned. If the video surveillance device is not in any direction and location of the room, it is determined that the video surveillance device is not in the room where the user is located.

For example, it is assumed that the light source of the mobile phone is aligned with the due north direction. If a first sequence formed by types of traffic data, obtained according to the foregoing processes, of the video surveillance device in on time windows and off time windows of five periods is X= (0, 0, 0, 0, 1, 0, 0, 0, 0, 0), and a second sequence formed when the light source of the electronic device in the on time windows and the off time windows is Y= (1, 0, 1, 0, 1, 0, 1, 0, 1, 0), the correlation coefficient between X and Y is as follows:

$$\rho(X,Y)=\frac{\text{cov}(X,Y)}{\sigma_X \bullet \sigma_Y}=\frac{E(X,Y)-E(X)E(Y)}{\sqrt{E(X^2)-E^2(X)} \bullet \sqrt{E(Y^2)-E^2(Y)}}$$

$$=\frac{0.1-0.1 \bullet 0.5}{\sqrt{0.09} \bullet \sqrt{0.25}}=0.33$$

Because the correlation coefficient between X and Y is 0.33, and is less than the preset threshold 0.5, it can be identified that the video surveillance device is not located in the direction with which the light source of the mobile phone is aligned, that is, the video surveillance device does not exist in the direction with which the light source of the mobile phone is aligned (namely, the due north direction). As shown in FIG. 3(i), the video surveillance device is not detected in the due north direction.

(3) Model 3

If the corresponding detection model is a deep learning model, the positive sample traffic data is surveillance video traffic generated when the light source of the detection device is in the on time window and the light source of the detection device is aligned with the video surveillance device, and the negative sample traffic data may be video traffic generated when the light source of the detection device is in the off time window or the light source of the detection device is not aligned with the video surveillance device.

Preprocessed traffic data may be segmented into traffic samples of a fixed size, and data of the traffic samples is directly input into the deep learning model, to obtain confidence levels of the traffic samples, a type of the data traffic is identified by using the confidence levels and a preset threshold, and a direction and location of a detected video surveillance device are identified with reference to a change of the type of the traffic and a change of the light source of the device.

A specific determining process is similar to the determining process of Model 1. For brevity, details are not described herein again.

(4) Model 4

If the corresponding detection model is a deep learning model, the positive sample traffic data is video traffic generated when the light source of the detection device is in the off time window or the light source of the detection device is not aligned with the video surveillance device, and the negative sample traffic data may be surveillance video traffic generated when the light source of the detection device is in the on time window and the light source of the detection device is aligned with the video surveillance device.

Preprocessed traffic data may be segmented into traffic samples of a fixed size, and data of the traffic samples is directly input into the deep learning model, to obtain confidence levels of the traffic samples, a type of the data traffic is identified by using the confidence levels and a preset threshold, and a direction and location of a detected video surveillance device are identified with reference to a change of the type of the traffic and a change of the light source of the device.

A specific determining process is similar to the determining process of Model 2. For brevity, details are not described herein again.

The following describes a procedure of a method for detecting a video surveillance device provided in this application.

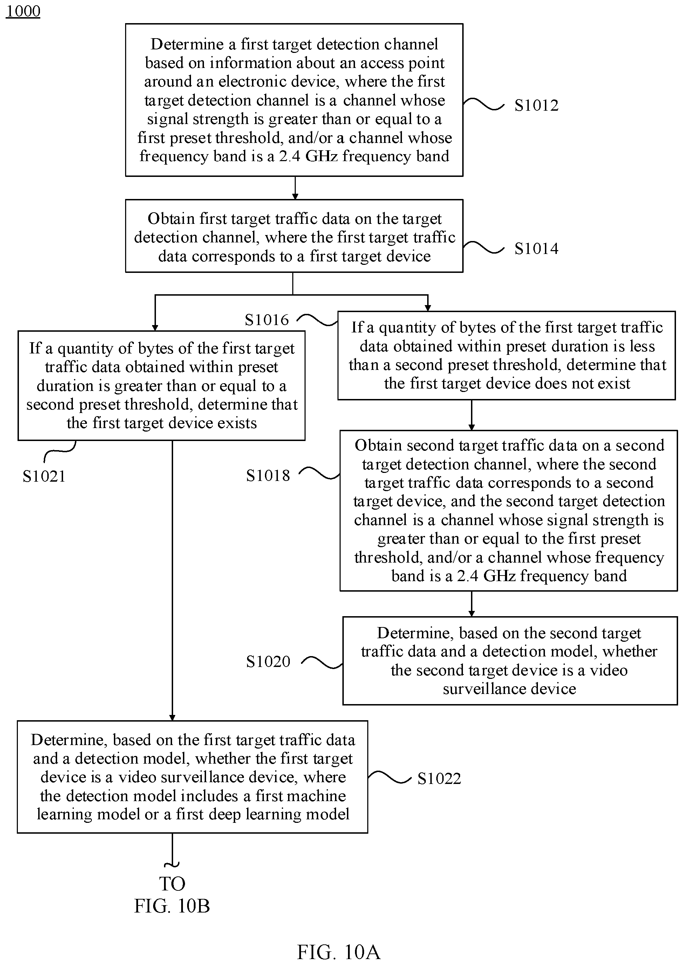

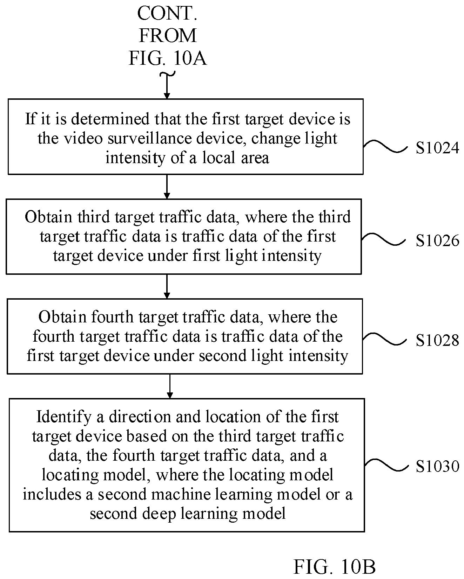

FIG. 10A and FIG. 10B are a schematic flowchart of a method 1000 for detecting a video surveillance device. Devices in the flowchart of the method include the electronic device 100 and a video surveillance device. The video surveillance device may be the camera shown in FIG. 3(e) or FIG. 4(e).

As shown in FIG. 10A and FIG. 10B, the method 1000 may include the following steps.

S1012: Determine a first target detection channel based on information about an access point around the electronic device, where the first target detection channel is a channel whose signal strength is greater than or equal to a first preset threshold and/or a channel whose frequency band is a 2.4 GHz frequency band.

The first target detection channel in this embodiment of this application may be a channel in the target detection channel list in S610. As described in S610, the channel in the target detection channel list may be obtained in two manners. For example, a channel whose signal strength is weak may be removed from the target channel list, to determine the first target detection channel. The first preset threshold may be the preset threshold in S610. For example, a channel of another frequency band such as 5 GHz may be removed from a target channel list of a detection device, and only a channel of the 2.4 GHz frequency band is reserved, to determine the first target detection channel.

S1014: Obtain first target traffic data on the target detection channel, where the first target traffic data corresponds to a first target device.

The first target traffic data in this embodiment of this application may be the traffic data in S620. For specific content, refer to the description in S620. For brevity, details are not described herein again.

Optionally, in some embodiments, as shown in FIG. 10A, after the obtaining first target traffic data on the target detection channel in S1014, the method 1000 may further include S1016 to S1021.

S1016: If a quantity of bytes of the first target traffic data obtained within preset duration is less than a second preset threshold, determine that the first target device does not exist.

In this embodiment of this application, that if the quantity of the bytes of the first target traffic data obtained within the preset duration is less than the second preset threshold, determining that the first target device does not exist may be understood that: If the quantity of the bytes of the first target traffic data obtained within the preset duration is less than the second preset threshold, the first target traffic data may not be traffic data consumed by the device, but traffic data consumed by a management frame, a control frame, or the like in a process of managing a service or controlling a service. Therefore, it can be determined that the first target device does not exist. Accelerating channel detection mentioned in S621 is used as an example. For the channel 1, if the quantity of the bytes of the traffic data detected by the detection device within 5s is less than the preset threshold, it can be determined that the first target device does not exist, and subsequent detection steps S630 to S670 on the channel 1 can be skipped, and the quantity of the bytes of the traffic data on the channel 2 continues to be determined. The preset duration may be 5s described as an example in S621, and the second preset threshold may be the preset threshold in S621.

If it is determined that the first target device does not exist, the following steps S1018 and S1020 continue to be performed.

S1018: Obtain second target traffic data on the target detection channel, where the second target traffic data corresponds to a second target device, and the second target detection channel is a channel whose signal strength is greater than or equal to the first preset threshold and/or a channel whose frequency band is a 2.4 GHz frequency band.

For obtaining the traffic data in this step, refer to the description in S620.

S1020: Determine, based on the second target traffic data and a detection model, whether the second target device is a video surveillance device.

S1021: If a quantity of bytes of the first target traffic data obtained within preset duration is greater than or equal to a second preset threshold, determine that the first target device exists.

S1022: Determine, based on the first target traffic data and the detection model, whether the first target device is a video surveillance device, where the detection model includes a first machine learning model or a first deep learning model.

For content of S1022, refer to the description in S650. Details are not described herein again.

According to the method for detecting a video surveillance device provided in this application, it is determined, based on the obtained first target traffic data on the first target detection channel and the detection model, whether the first target device corresponding to the first target traffic data is the video surveillance device, so that the video surveillance device can be detected without adding an additional hardware module, and the video surveillance device can be detected without accessing a network in which the video surveillance device is located. This can improve comprehensiveness and accuracy of detecting the video surveillance device, thereby reducing occurrence of a user privacy infringement event.

If it is determined that the first target device is the video surveillance device, the following steps S1024 to S1030 continue to be performed.

S1024: If it is determined that the first target device is the video surveillance device, change light intensity of a local area.

For example, refer to the description in the interface shown in FIG. 3(f). The light intensity of the ambient environment may be reduced first. For example, an indoor light is turned off and a curtain is closed to reduce ambient light as much as possible.

S1026: Obtain third target traffic data, where the third target traffic data is traffic data of the first target device under first light intensity.

S1028: Obtain fourth target traffic data, where the fourth target traffic data is traffic data of the first target device under second light intensity.

In a possible implementation, the first light intensity may be light intensity when a flash of the electronic device is in an on state, and the second light intensity is light intensity when the flash of the electronic device is in an off state. Correspondingly, the third target traffic data may be traffic data generated when the flash of the electronic device is in an on state and the flash is aligned with the video surveillance device; and the fourth target traffic data is traffic data generated when the flash of the electronic device is in an off state or the flash is not aligned with the video surveillance device.

In another possible implementation, the first light intensity may be light intensity when a flash of the electronic device is in an off state, and the second light intensity is light intensity when the flash of the electronic device is in an on state. Correspondingly, the third target traffic data may be traffic data generated when the flash of the electronic device is in the off state or the flash is not aligned with the video surveillance device; and the fourth target traffic data is traffic data generated when the flash of the electronic device is in the on state and the flash is aligned with the video surveillance device.

For specific content, refer to the description in S720. Details are not described herein again.

S1030: Identify a direction and location of the first target device based on the third target traffic data, the fourth target traffic data, and a locating model, where the locating model includes a second machine learning model or a second deep learning model.

The locating model in this application may be the locating model mentioned in S770. While reducing ambient environment light around the electronic device, the user can turn on the flash of the electronic device, and a light source of the electronic device can be aligned with a preset direction, to capture, parse, and preprocess video traffic data (which includes the third target traffic data and the fourth target traffic data). Further, the electronic device may identify, by using the locating model, the direction and the location of the first target device corresponding to the traffic data. For a specific process, refer to the description in FIG. 7 to FIG. 9. Details are not described herein again.

According to the solution provided in this embodiment of this application, the electronic device can identify a direction and location of the video surveillance device based on the obtained third target traffic data, the obtained fourth target traffic data, and the locating model. This helps a user locate the video surveillance device in a timely and accurate manner, and can reduce occurrence of a user privacy infringement event, thereby protecting user privacy.

This application further provides a GUI. The GUI is stored in an electronic device. The electronic device includes a display, a memory, and one or more processors. The one or more processors are configured to execute one or more computer programs stored in the memory. The graphical user interface includes:

a first GUI displayed on the display, where the first GUI includes an icon of a first application, and is used to detect whether a video surveillance device exists in a current network space, and locate the video surveillance device when the video surveillance device exists; and displaying a second GUI on the display in response to a touch event for the first application, where the second GUI includes a detection control.

FIG. 3(a) to FIG. 3(j) are used as an example. As shown in FIG. 3(a), the icon of the first application may be the icon 301 of the first application in FIG. 3(a).

In this embodiment of this application, the displaying a second GUI on the display in response to a touch event for the first application may be understood as an operation of tapping the icon of the first application by a user, and displaying the GUI shown in FIG. 3(b).

The detection control included in the second GUI may be the known icon of the GUI shown in FIG. 3(b).

The touch event in this embodiment of this application may be implemented by using a touch sensor in the electronic device. For example, a touch operation (the operation of tapping the icon of the first application by the user) on a touchscreen may be detected by using the touch sensor 180K shown in FIG. 1, and the detected touch operation is transferred to an application processor, to determine a type of the touch event. In addition, the display 194 provides a visual output related to the touch operation (displaying the second GUI on the display).

Optionally, in some embodiments, the graphical user interface further includes: displaying a third GUI on the display in response to a touch event for the detection control, where the third GUI is used to display detection progress and information about a current detection channel.

For example, in this embodiment of this application, the displaying a third GUI on the display in response to a touch event for the detection control may be understood as an operation of tapping the known icon 302 by a user, and displaying the GUI shown in FIG. 3(c).

As shown in the GUI shown in FIG. 3(c), the GUI is an interface on which the mobile phone is performing scanning. 2% shown in the figure indicates that detection progress of the mobile phone is 2% in this case. The figure may further include information about hotspots covered by the current detection channel.

Similarly, the touch event in this embodiment of this application may be implemented by using a touch sensor in the electronic device. For example, a touch operation (the operation of tapping the icon of the detection control by the user) on a touchscreen may be detected by using the touch sensor 180K shown in FIG. 1, and the detected touch operation is transferred to an application processor, to determine a type of the touch event. In addition, the display 194 provides a visual output related to the touch operation (displaying the third GUI on the display).

Optionally, in some embodiments, the graphical user interface further includes a fourth GUI displayed on the display, where the fourth GUI is used to display first prompt information, and the first prompt information is used to prompt that the video surveillance device does not exist; or

the fourth GUI is used to display second prompt information and a locating control, and the second prompt information is used to prompt that the video surveillance device exists, and the locating control is used to locate the video surveillance device.

For example, the fourth GUI in this embodiment of this application may be the GUI shown in FIG. 3(d) or FIG. 3(e).

If the fourth GUI is used to display that there is no video surveillance device, the fourth GUI may be the GUI shown in FIG. 3(d).

If the fourth GUI is used to display that there are the video surveillance device and the locating control used to locate the video surveillance device, the fourth GUI may be the GUI shown in FIG. 3(e).

Optionally, in some embodiments, the graphical user interface further includes: displaying a fifth GUI on the display in response to a touch event for the locating control, where the fifth GUI is used to display third prompt information and the locating control, and the third prompt information includes a locating description used to prompt a user to perform locating.

For example, in this embodiment of this application, the displaying a fifth GUI on the display in response to a touch event for the locating control may be understood as an operation of tapping the known icon 303 by the user, and displaying the GUI shown in FIG. 3(f).

The locating description may be displayed in the GUI shown in FIG. 3(f): turn off an indoor light and close a curtain to reduce ambient light as much as possible, hold a device (namely, the mobile phone) to align with surroundings of a room, rotate slowly around, and locate the device based on an interface prompt.

The locating control may be understood as the known icon 304 displayed in the GUI shown in FIG. 3(f).

Similarly, the touch event in this embodiment of this application may also be implemented by using a touch sensor in the electronic device. For example, a touch operation (the operation of tapping the icon of the locating control by the user) on a touchscreen may be detected by using the touch sensor 180K shown in FIG. 1, and the detected touch operation is transferred to an application processor, to determine a type of the touch event. In addition, the display 194 provides a visual output related to the touch operation (displaying the fifth GUI on the display).

Optionally, in some embodiments, the graphical user interface further includes a sixth GUI displayed on the display, where the sixth GUI is used to display fourth prompt information, and the fourth prompt information is used to prompt a user to perform a guiding action of locating.

For example, the sixth GUI in this embodiment of this application may be the GUI shown in FIG. 3(g), and the guiding action may be displayed in the GUI shown in FIG. 3(g): rotate around.

Optionally, in some embodiments, the graphical user interface further includes a seventh GUI displayed on the display, where the seventh GUI is used to display location information of the video surveillance device.

For example, the seventh GUI in this embodiment of this application may be the GUI shown in FIG. 3(i). As shown in the GUI shown in FIG. 3(i), a result of this display is that there are two video surveillance devices in the room: a device 1 and a device 2, which are respectively located at an east side and a south side of the user

It may be understood that, to implement the foregoing functions, the electronic device includes corresponding hardware and/or software modules for performing the functions. With reference to algorithm steps of examples described in embodiments disclosed in this specification, this application can be implemented in a form of hardware or a combination of hardware and computer software. Whether a function is implemented by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the electronic device may be divided into function modules based on the foregoing method examples. For example, each function module may be obtained through division based on each corresponding function, or two or more functions may be integrated into one processing module. The foregoing integrated module may be implemented in a form of hardware. It should be noted that, in embodiments, module division is an example, is merely a logical function division, and may be another division during actual implementation.

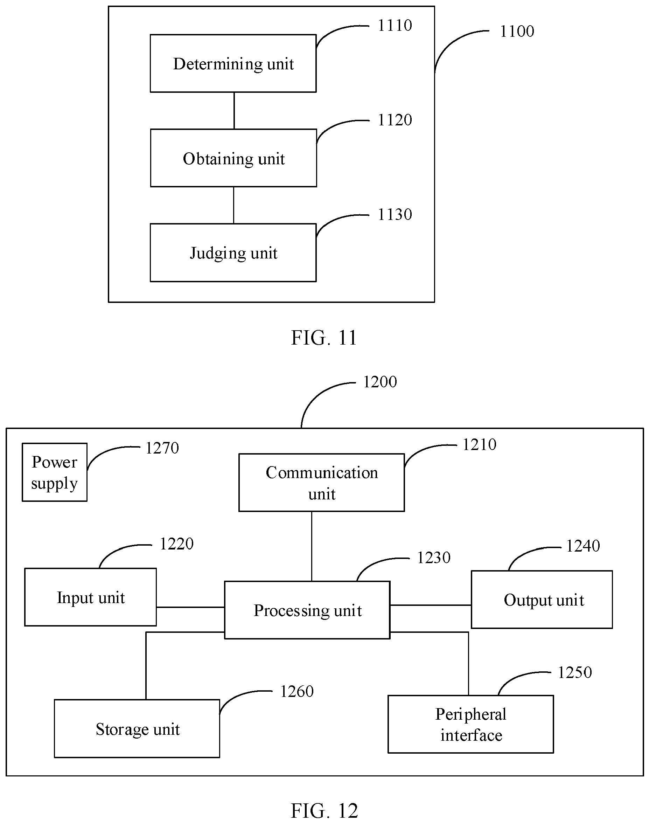

When each function module is obtained through division based on each corresponding function, FIG. 11 is a possible schematic composition diagram of an electronic device 1100 in the foregoing embodiments. As shown in FIG. 11, the electronic device 1100 may include a determining unit 1110, an obtaining unit 1120, and a judging unit 1130.

The determining unit 1110 may be configured to support the electronic device 1100 in performing the foregoing steps S1012, S1016, S1021, and the like, and/or another process of the technology described in this specification.

The obtaining unit 1120 may be configured to support the electronic device 1100 in performing the foregoing steps S1014, S1018, S1026, S1028, and the like, and/or another process of the technology described in this specification.

The judging unit 1130 may be configured to support the electronic device 1100 in performing the foregoing steps S1020, S1022, and the like, and/or another process of the technology described in this specification.

It should be noted that all related content of the steps in the foregoing method embodiments may be cited in function description of corresponding function modules. Details are not described herein again.

The electronic device provided in this embodiment is configured to perform the foregoing method for detecting a video surveillance device, and therefore can achieve same effect as the foregoing implementation method.

When an integrated unit is used, the electronic device may include a processing module, a storage module, and a communication module. The processing module may be configured to control and manage actions of the electronic device, for example, may be configured to support the electronic device in performing the steps performed by the foregoing units. The storage module may be configured to support the electronic device in storing program code, data, and the like. The communication module may be configured to support communication between the electronic device and another device.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, such as a radio frequency circuit, a Bluetooth chip, or a Wi-Fi chip.

In an embodiment, when the processing module is a processor and the storage module is a memory, the electronic device in this embodiment may be a device having the structure shown in FIG. 1.

FIG. 12 is another possible schematic composition diagram of an electronic device 1200 in the foregoing embodiments. As shown in FIG. 12, the electronic device 1200 may include a communication unit 1210, an input unit 1220, a processing unit 1230, an output unit 1240, a peripheral interface 1250, a storage unit 1260, and a power supply 1270.

The communication unit 1210 is configured to establish a communication channel, so that the electronic device 1200 connects to a remote server through the communication channel and downloads media data from the remote server. The communication unit 1210 may include a communication module such as a WLAN module, a Bluetooth module, an NFC module, and a baseband module, and a radio frequency (Radio Frequency, RF for short) circuit corresponding to the communication module, and is configured to perform wireless local area network communication, Bluetooth communication, NFC communication, infrared communication, and/or cellular communication system communication, for example, wideband code division multiple access (wideband code division multiple access, W-CDMA) and/or high speed downlink packet access (high speed downlink packet access, HSDPA). The communication module 1210 is configured to control communication of each component in the electronic device, and may support direct memory access.

In the foregoing embodiments, S620 of obtaining traffic data on a target detection channel, and S720 of changing light intensity of a local area and capturing the video traffic data may be implemented by using the communication unit 1210.

The input unit 1220 may be configured to implement interaction between a user and the electronic device and/or information input into the electronic device. In a specific implementation of the present invention, the input unit may be a touch panel, or may be another human-machine interaction interface, such as a physical input key and a microphone, or may be another external information capture apparatus, such as a camera.

In the foregoing embodiment, after receiving the detection command, the input unit 1220 may perform S610.

The processing unit 1230 is a control center of the electronic device, may connect to various parts of the entire electronic device through various interfaces and lines, and execute various functions of the electronic device and/or process data by running or executing a software program and/or a module stored in the storage unit and invoking data stored in the storage unit.

The output unit 1240 includes but is not limited to an image output unit and a sound output unit. The image output unit is configured to output a character, a picture, and/or a video. In a specific implementation of the present invention, the touch panel used by the input unit 1220 may also be used as a display panel of the output unit 1240. For example, after detecting a gesture operation of touching or approaching the touch panel, the touch panel transmits the gesture operation to the processing unit to determine a type of a touch event, and subsequently, the processing unit provides corresponding visual output on the display panel based on the type of the touch event. In FIG. 12, the input unit 1220 and the output unit 1240 are used as two independent components to implement input and output functions of the electronic device. However, in some embodiments, the touch panel and the display panel may be integrated to implement the input and output functions of the electronic device. For example, the image output unit may display various graphical user interfaces as virtual control components, including but not limited to a window, a scrollbar, an icon, and a clipboard, so that a user performs an operation in a touch manner.

In the foregoing embodiments, S660 of prompting a user that there is a video surveillance device in a network space, S670 of prompting the user that there is no video surveillance device in the network space, S760 of providing the direction and the location of the video surveillance device, and S770 of prompting that the video surveillance device is not in the room where the user is located may be implemented by using the output unit 1240.

The storage unit 1260 may be configured to store the software program and the module. By running the software program and the module that are stored in the storage unit, the processing unit executes various functional applications of the electronic device and implements data processing.

An embodiment further provides a computer storage medium. The computer storage medium stores computer instructions. When the computer instructions are run on an electronic device, the electronic device is enabled to perform the foregoing related method steps, to implement the method for detecting a video surveillance device in the foregoing embodiments.

An embodiment further provides a computer program product. When the computer program product runs on a computer, the computer is enabled to perform the foregoing related steps, to implement the method for detecting a video surveillance device in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the method for detecting a video surveillance device in the foregoing method embodiments.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein again.

Based on the descriptions of the foregoing implementations, it may be understood by a person skilled in the art that, for ease and brevity of description, division into the foregoing function modules is merely used as an example for description. During actual application, the foregoing functions may be allocated to different function modules for implementation based on a requirement, that is, an internal structure of an apparatus is divided into different function modules, to implement all or some of the functions described above.

In the several embodiments provided in this application, it should be understood that the disclosed apparatus and method may be implemented in another manner. For example, the described apparatus embodiment is merely an example. For example, division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may be one or more physical units, may be located in one place, or may be distributed in a plurality of different places. Some or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit. The foregoing integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium, and includes a plurality of instructions for instructing a device (which may be a single-chip microcomputer, a chip, or the like) or a processor (processor) to perform all or some of the steps of the method in embodiments of this application. The foregoing storage medium includes any medium that can store program code, such as a USB flash drive, a removable hard disk, a ROM, a RAM, a magnetic disk, or an optical disc.

The foregoing content is merely specific implementations of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1.  A method for detecting a video surveillance device, wherein the method is applied to an electronic device, and comprises:

    determining a first target detection channel based on information about an access point around the electronic device, wherein the first target detection channel is a channel whose signal strength is greater than or equal to a first preset threshold, and/or a channel whose frequency band is a 2.4 GHz frequency band;
    obtaining first target traffic data on the first target detection channel, wherein the first target traffic data corresponds to a first target device; and

determining, based on the first target traffic data and a detection model, whether the first target device is a video surveillance device, wherein the detection model comprises a first machine learning model or a first deep learning model.

2. The method according to claim 1, wherein after the obtaining first target traffic data on the first target detection channel, the method further comprises:

if a quantity of bytes of the first target traffic data obtained within preset duration is greater than or equal to a second preset threshold, determining that the first target device exists.

3. The method according to claim 1, wherein after the obtaining first target traffic data on the first target detection channel, the method further comprises:

if a quantity of bytes of the first target traffic data obtained within preset duration is less than a second preset threshold, determining that the first target device does not exist;

obtaining second target traffic data on a second target detection channel, wherein the second target traffic data corresponds to a second target device, and the second target detection channel is a channel whose signal strength is greater than or equal to the first preset threshold, and/or a channel whose frequency band is a 2.4 GHz frequency band; and

determining, based on the second target traffic data and the detection model, whether the second target device is the video surveillance device.

4. The method according to any one of claims 1 to 3, wherein the method further comprises:

if a determining result is that the first target device is the video surveillance device, changing light intensity of a local area;

obtaining third target traffic data, wherein the third target traffic data is traffic data of the first target device under first light intensity;

obtaining fourth target traffic data, wherein the fourth target traffic data is traffic data of the first target device under second light intensity; and

identifying a direction and location of the first target device based on the third target traffic data, the fourth target traffic data, and a locating model, wherein the locating model comprises a second machine learning model or a second deep learning model.

5. The method according to claim 4, wherein the third target traffic data is traffic data collected when a light source of the electronic device is aligned with a preset direction and the light source is in an on time window; and

the fourth target traffic data is traffic data collected when the light source is aligned with the preset direction and the light source is in an off time window, or traffic data collected when the light source is not aligned with the preset direction.

6. The method according to claim 4 or 5, wherein the second machine learning model or the second deep learning model is obtained by training collected first positive sample data and first negative sample data; and

the first positive sample data is data generated when the electronic device is in an on time window and the light source of the electronic device is aligned with a known video surveillance device, and the first negative sample data is data generated when the electronic device is in an off time window or the light source is not aligned with the known video surveillance device; or

the first positive sample data is data generated when the electronic device is in an off time window or the light source is not aligned with the known video surveillance device, and the first negative sample data is data generated when the electronic device is in an on time window and the light source is aligned with the known video surveillance device.

7. The method according to claim 6, wherein the identifying a direction and location of the first target device based on the third target traffic data, the fourth target traffic data, and a locating model comprises:

performing sample segmentation on the third target traffic data and the fourth target traffic data, to obtain target traffic data that is corresponding to the first target device and that is in an on time window and off time window of each of M periods;

separately segmenting the target traffic data that is corresponding to the first target device and that is in each of the M periods into m1 groups of traffic data and m2 groups of traffic data, wherein the m1 groups of traffic data are data in the on time window, the m2 groups of traffic data are data in the off time window, and both m1 and m2 are positive integers greater than or equal to 1;

inputting first target information into the locating model, to obtain confidence levels of the m1 groups of traffic data and the m2 groups of traffic data in each period, wherein the first target information is an eigenvector of the m1 groups of traffic data and an eigenvector of the m2 groups of traffic data in each period, or the first target information is the m1 groups of traffic data and the m2 groups of traffic data in each period;

identifying, based on the confidence levels of the m1 groups of traffic data and the m2 groups of traffic data in each period and a third preset threshold, a type of the target traffic data corresponding to the first target device; and

identifying the direction and the location of the first target device based on a first sequence formed by the type of the target traffic data corresponding to the first target device and a second sequence formed when the light source of the electronic device is in an on time window or an off time window.

8. The method according to claim 7, wherein if the locating model is the second machine learning model, the first target information is the eigenvector of the m1 groups of traffic data and the eigenvector of the m2 groups of traffic data in each period; or

if the locating model is the second deep learning model, the first target information is the m1 groups of traffic data and the m2 groups of traffic data in each period.

9. The method according to claim 7 or 8, wherein the eigenvector of the m1 groups of traffic data or the eigenvector of the m2 groups of traffic data comprises at least one of the following vectors:

a traffic rate discrete Fourier transform coefficient, a packet-length-related statistical feature, a duration-related statistical feature, and a data frame time-of-arrival-related statistical feature.

10. The method according to any one of claims 7 to 9, wherein the identifying, based on the confidence levels of the m1 groups of traffic data and the m2 groups of traffic data in each period and a third preset threshold, a type of the target traffic data corresponding to the first target device comprises:

identifying, based on an average value of the confidence levels of the m1 groups of traffic data in each period, an average value of the confidence levels of the m2 groups of traffic data in each period, and the third preset threshold, the type of the target traffic data corresponding to the first target device; or

identifying, based on m3, m4, m5, and m6, the type of the target traffic data corresponding to the first target device, wherein m3 is a quantity of groups of traffic data that are in the m1 groups of traffic data in each period and whose confidence levels are greater than or equal to the third preset threshold, m4 is a quantity of groups of traffic data that are in the m1 groups of traffic data in each period and whose confidence levels are less than the third preset threshold, m5 is a quantity of groups of traffic data that are in the m2 groups of traffic data in each period and whose confidence levels are greater than or equal to the third preset threshold, and m6 is a quantity of groups of traffic data that are in the m2 groups of traffic data in each period and whose confidence levels are less than the third preset threshold.

11. The method according to claim 10, wherein if the first positive sample data is the data generated when the electronic device is in the on time window and the light source of the electronic device is aligned with the known video surveillance device, the first negative sample data is the data generated when the electronic device is in the off time window or the light source is not aligned with the known video surveillance device; and

the identifying, based on an average value of the confidence levels of the m1 groups of traffic data in each period, an average value of the confidence levels of the m2 groups of traffic data in each period, and the third preset threshold, the type of the target traffic data corresponding to the first target device comprises:

if an average value of confidence levels of all m1 groups of traffic data in the M periods is greater than or equal to the third preset threshold, identifying that all the m1 groups of traffic data are of a type of the data generated when the light source of the electronic device is aligned with the known video surveillance device and the electronic device is in the on time window; and

if an average value of confidence levels of all m2 groups of traffic data in the M periods is less than the third preset threshold, identifying that all the m2 groups of traffic data are of a type of the data generated when the light source of the electronic device is not aligned with the known video surveillance device or a type of the data generated when the electronic device is in the off time window; or

the identifying, based on m3, m4, m5, and m6, the type of the target traffic data corresponding to the first target device comprises:

if m3≥m4 and m5≤m6, identifying that the type of the target traffic data is a type of the data generated when the light source of the electronic device is aligned with the known video surveillance device and the electronic device is in the on time window; or
if m3<m4 and m5≤m6, identifying that the type of the target traffic data is a type of the data generated when the light source of the electronic device is not aligned with the known video surveillance device or a type of the data generated when the electronic device is in the off time window.

12. The method according to claim 10, wherein if the first positive sample data is the data generated when the electronic device is in the off time window or the light source is not aligned with the known video surveillance device, the first negative sample data is the data generated when the electronic device is in the on time window and the light source of the electronic device is aligned with the known video surveillance device; and

the identifying, based on an average value of the confidence levels of the m1 groups of traffic data in each period, an average value of the confidence levels of the m2 groups of traffic data in each period, and the third preset threshold, the type of the target traffic data corresponding to the first target device comprises:

if an average value of confidence levels of all m1 groups of traffic data in the M periods is less than the third preset threshold, identifying that all the m1 groups of traffic data are of a type of the data generated when the light source of the electronic device is aligned with the known video surveillance device and the electronic device is in the on time window; and
if an average value of confidence levels of all m2 groups of traffic data in the M periods is greater than or equal to the third preset threshold, identifying that all the m2 groups of traffic data are of a type of the data generated when the light source of the electronic device is not aligned with the known video surveillance device or a type of the data generated when the electronic device is in the off time window; or

the identifying, based on m3, m4, m5, and m6, the type of the target traffic data corresponding to the first target device comprises:

if m3≥m4 and m5≥m6, identifying that the type of the target traffic data is a type of the data generated when the light source of the electronic device is not aligned with the known video surveillance device or a type of the data generated when the electronic device is in the off time window; or
if m3<m4 and m5≥m6, identifying that the type of the target traffic data is a type of the data generated when the light source of the electronic device is aligned with the known video surveillance device and the electronic device is in the on time window.

13. The method according to any one of claims 7 to 12, wherein the identifying the direction and the location of the first target device based on a first sequence formed by the type of the target traffic data corresponding to the first target device and a second sequence formed when the electronic device is in an on time window or an off time window comprises:

if a correlation coefficient between the first sequence and the second sequence is greater than or equal to a fourth preset threshold, the first target device is located in the preset direction with which the light source of the electronic device is aligned; or
if a correlation coefficient between the first sequence and the second sequence is less than a fourth preset threshold, the first target device is not located in the preset direction with which the light source of the electronic device is aligned.

14. The method according to any one of claims 4 to 13, wherein the identifying a direction and location of the first target device based on the third target traffic data, the fourth target traffic data, and a locating model comprises:
identifying the direction and the location of the first target device based on a moving track of the electronic device, the third target traffic data, the fourth target traffic data, and the locating model, wherein the moving track is a track formed by separately and sequentially aligning the electronic device with each direction in a current environment.

15. The method according to any one of claims 1 to 14, wherein the determining, based on the first target traffic data and a detection model, whether the first target device is a video surveillance device comprises:

segmenting the first target traffic data into n groups of traffic data, wherein n is a positive integer greater than or equal to 1;

inputting second target information into the detection model, to obtain confidence levels of the n groups of traffic data, wherein the second target information is an eigenvector of the n groups of traffic data or the n groups of traffic data; and

determining, based on the confidence levels of the n groups of traffic data and a fifth preset threshold, whether the first target device is the video surveillance device.

16. The method according to claim 15, wherein if the detection model is the first machine learning model, the second target information is the eigenvector of the n groups of traffic data; or

if the detection model is the first deep learning model, the second target information is the n groups of traffic data.

17. The method according to claim 15 or 16, wherein the eigenvector of the n groups of traffic data comprises at least one of the following vectors:

a packet-length-related statistical feature of the n groups of traffic data, a duration-related statistical feature of the n groups of traffic data, a time-of-arrival-related statistical feature of the n groups of traffic data, an instantaneous traffic bandwidth of the n groups of traffic data, a data-rate-related statistical feature of the n groups of traffic data, and a time-frequency-pattern-related texture feature a data rate of the n groups of traffic data.

18. The method according to any one of claims 15 to 17, wherein the detection model is obtained by training second positive sample traffic data and second negative sample traffic data;

if the second positive sample traffic data is traffic data generated by training a known video surveillance device, the second negative sample traffic data is traffic data generated by training a non-video surveillance device; and

the determining, based on the confidence levels of the n groups of traffic data and a fifth preset threshold, whether the first target device is the video surveillance device comprises:

if an average value of the confidence levels of the n groups of traffic data is greater than or equal to the fifth preset threshold, the first target device is the video surveillance device; or

if an average value of the confidence levels of the n groups of traffic data is less than the fifth preset threshold, the first target device is not the video surveillance device; or

if n1≥n2, the first target device is the video surveillance device; or

if n1<n2, the first target device is not the video surveillance device, wherein

n1 is a quantity of groups of traffic data that are in the n groups of traffic data and whose confidence levels are greater than or equal to the fifth preset threshold, and n2 is a quantity of groups of traffic data that are in the n groups of traffic data and whose confidence levels are less than the fifth preset threshold.

19. The method according to any one of claims 15 to 17, wherein the detection model is obtained by training second positive sample traffic data and second negative sample traffic data;

if the second positive sample traffic data is traffic data generated by training a non-video surveillance device, the second negative sample traffic data is traffic data generated by training a known video surveillance device; and

the determining, based on the confidence levels of the n groups of traffic data and a fifth preset threshold, whether the first target device is the video surveillance device comprises:

if an average value of the confidence levels of the n groups of traffic data is less than the fifth preset threshold, the first target device is the video surveillance device; or

if an average value of the confidence levels of the n groups of traffic data is greater than or equal to the fifth preset threshold, the first target device is not the video surveillance device; or

if n3≥n4, the first target device is the video surveillance device; or

if n3<n4, the first target device is not the video surveillance device, wherein

n3 is a quantity of groups of traffic data that are in the n groups of traffic data and whose confidence levels are less than the fifth preset threshold, and n4 is a quantity of groups of traffic data that are in the n groups of traffic data and whose confidence levels are greater than or equal to the fifth preset threshold.

20. The method according to any one of claims 1 to 19, wherein the method further comprises:

obtaining first MAC layer information of the first target traffic data; and

performing traffic splitting on the first target traffic data based on the first MAC layer information, to obtain fifth target traffic data and sixth target traffic data, wherein the fifth target traffic data and the sixth target traffic data respectively correspond to a third target device and a fourth target device; and

the determining, based on the first target traffic data and a detection model, whether the first target device is a video surveillance device comprises:

> determining, based on the fifth target traffic data and the detection model, whether the third target device is the video surveillance device; and

> determining, based on the sixth target traffic data and the detection model, whether the fourth target device is the video surveillance device.

21. The method according to any one of claims 1 to 20, wherein

a target detection channel list comprises a second target detection channel, and the second target detection channel is a channel whose signal strength is greater than or equal to the first preset threshold, and/or a channel whose frequency band is a 2.4 GHz frequency band; and

after the obtaining first target traffic data on the first target detection channel, the method further comprises:

> obtaining second target traffic data on the second target detection channel, wherein the second target traffic data corresponds to a second target device; and

> determining, based on the second target traffic data and the detection model, whether the second target device is the video surveillance device.

22. The method according to any one of claims 1 to 21, wherein before the obtaining first target traffic data on the first target detection channel, the method further comprises:
setting a working mode of a Wi-Fi chip of the electronic device to a monitoring mode.

23. An electronic device, comprising:

one or more processors; and
one or more memories, wherein
the one or more memories store one or more computer programs, the one or more computer programs comprise instructions, and when the instructions are executed by the one or more processors, the electronic device is enabled to perform the method according to any one of claims 1 to 22.

24. A chip system, wherein the chip system comprises at least one processor, and when program instructions are executed in the at least one processor, a function of the method according to any one of claims 1 to 22 is implemented on an electronic device.

25. A computer storage medium, comprising computer instructions, wherein when the computer instructions are run on an electronic device, the electronic device is enabled to perform the method according to any one of claims 1 to 22.

26. A computer program product, wherein when the computer program product runs on a computer, the computer is enabled to perform the method according to any one of claims 1 to 22.

Electronic device 100

Antenna 1

Antenna 2

| Mobile communication module<br>2G/3G/4G/5G<br>[150] | Wireless communication module<br>BT/WLAN/GNSS/NFC/IR/FM<br>[160] |

Speaker [170A]

Receiver [170B]

Microphone [170C]

Headset jack [170D]

Audio module [170]

Displays 1 to N [194]

Cameras 1 to N [193]

Indicator [192]

Motor [191]

Button [190]

Internal memory [121]

SIM card interfaces 1 to N [195]

External memory interface [120]

Processor

[110]

Sensor module [180]

Pressure sensor [180A]

Gyro sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 1

| Application layer | Camera | Calendar | Map | WLAN | Music | Messages |
| | Gallery | Phone | Navigation | Bluetooth | Videos | ... |

| Application framework layer | Window manager | Content provider | Phone manager | Resource manager |
| | Notification manager | View system | ... | |

| System library | Surface manager | Three-dimensional graphics processing library | Android runtime |
| | 2D graphics engine | Media library | Image processing library | ... |

| Kernel layer | Display driver | Camera driver |
| | Audio driver | Sensor driver | ... |

FIG. 2

FIG. 3(a)

← Locate cameras  ?

**Locate cameras**
Intelligent scan and locate webcams to protect your privacy

302

OK

FIG. 3(b)

FIG. 3(c)

FIG. 3(d)

Two cameras are found
Recommended to locate detailed location

Information about hotspots connected to the cameras:

Tplink_123        44:ee:bf:09:9d:23

Tplink_000        80:9f:9b:e1:2b:2b

303

Start locating

FIG. 3(e)

Locate cameras

**How to locate cameras**
Turn off an indoor light and close a curtain to reduce
ambient light as much as possible,
hold a device to align with surroundings of a room,
rotate slowly around, and
locate a device according to an interface prompt

304

OK

FIG. 3(f)

FIG. 3(g)

FIG. 3(h)

FIG. 3(i)

Locate cameras

No camera is found

Complete

FIG. 3(j)

FIG. 4(a)

FIG. 4(b)

FIG. 4(c)

FIG. 4(d)

Two cameras are found
Recommended to locate detailed location

Information about hotspots connected to the cameras:

Tplink_123          44:ee:bf:09:9d:23

Tplink_000          80:9f:9b:e1:2b:2b

303

Start locating

FIG. 4(e)

600

Scan a surrounding access point, and screen out a target detection channel list ⟿ S610

Obtain traffic data on a target detection channel ⟿ S620

Accelerate channel detection ⟿ S621

Extract an eigenvector from the traffic data ⟿ S630

S650

Train a traffic data classifier model S640

Determine a type of the traffic data by using a detection model, and determine, based on the type of the traffic data, whether a device corresponding to the traffic data is a video surveillance device

Prompt that no video surveillance device exists ⟿ S670

Prompt that the video surveillance device exists ⟿ S660

FIG. 5

EP 4 213 415 A1

700

Extract information about a video surveillance device — S710

Change light intensity of a local area, and capture video traffic data — S720

S740 — Train a traffic data classifier model

Classify video traffic — S730

Determine, with reference to a change of a flash and a type of the video traffic, whether the flash is aligned with the video surveillance device — S750

The video surveillance device is not in user's room — S770

Provide a direction and location of the video surveillance device — S760

FIG. 6

EP 4 213 415 A1

0°

270°

90°

180°

FIG. 7

Video
traffic

Time

FIG. 8(a)

Video
traffic

Time

FIG. 8(b)

Video
traffic

Time

FIG. 8(c)

Light
intensity

Time

FIG. 9

1000

Determine a first target detection channel based on information about an access point around an electronic device, where the first target detection channel is a channel whose signal strength is greater than or equal to a first preset threshold, and/or a channel whose frequency band is a 2.4 GHz frequency band — S1012

Obtain first target traffic data on the target detection channel, where the first target traffic data corresponds to a first target device — S1014

S1016

If a quantity of bytes of the first target traffic data obtained within preset duration is greater than or equal to a second preset threshold, determine that the first target device exists

S1021

If a quantity of bytes of the first target traffic data obtained within preset duration is less than a second preset threshold, determine that the first target device does not exist

Obtain second target traffic data on a second target detection channel, where the second target traffic data corresponds to a second target device, and the second target detection channel is a channel whose signal strength is greater than or equal to the first preset threshold, and/or a channel whose frequency band is a 2.4 GHz frequency band — S1018

Determine, based on the second target traffic data and a detection model, whether the second target device is a video surveillance device — S1020

Determine, based on the first target traffic data and a detection model, whether the first target device is a video surveillance device, where the detection model includes a first machine learning model or a first deep learning model — S1022

TO
FIG. 10B

FIG. 10A

CONT.
FROM
FIG. 10A

If it is determined that the first target device is the video surveillance device, change light intensity of a local area | S1024

Obtain third target traffic data, where the third target traffic data is traffic data of the first target device under first light intensity | S1026

Obtain fourth target traffic data, where the fourth target traffic data is traffic data of the first target device under second light intensity | S1028

Identify a direction and location of the first target device based on the third target traffic data, the fourth target traffic data, and a locating model, where the locating model includes a second machine learning model or a second deep learning model | S1030

FIG. 10B

FIG. 11

FIG. 12

<div align="center">**INTERNATIONAL SEARCH REPORT**</div>

| International application No. |
| --- |
| **PCT/CN2021/117445** |

**A. CLASSIFICATION OF SUBJECT MATTER**

H04B 17/309(2015.01)i

According to International Patent Classification (IPC) or to both national classification and IPC

**B. FIELDS SEARCHED**

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNKI, CNPAT, WPI, EPODOC, IEEE: 视频, 监控, 隐藏, 无线, 摄像头, 检测, 探测, 接入点, 信道, 流量, 学习, 定位, 位置, 方向, 向量, 模型, video, monitor+, prob+, detect+, wireless, hidden, spy, camera, webcam, access, point, AP, channel, flow, traffic, learn+, locat+, direction, model, vector

**C. DOCUMENTS CONSIDERED TO BE RELEVANT**

| Category* | Citation of document, with indication, where appropriate, of the relevant passages | Relevant to claim No. |
| --- | --- | --- |
| X | CHENG, Yushi et al. "On Detecting Hidden Wireless Cameras: A Traffic Pattern-based Approach" *IEEE TRANSACTIONS ON MOBILE COMPUTING,* Vol. 19, No. 4, 30 April 2020 (2020-04-30), Full text, pages 1-11, figure 9 | 1-26 |
| X | CN 110602041 A (PLA STRATEGIC SUPPORT FORCE INFORMATION ENGINEERING UNIVERSITY) 20 December 2019 (2019-12-20) description, paragraphs [0034]-[0068] | 1-26 |
| A | CN 111123388 A (BEIJING SCIENCE AND TECHNOLOGY CO., THREE FAST ONLINE) 08 May 2020 (2020-05-08) entire document | 1-26 |
| A | CN 111757365 A (PI2STAR TECHNOLOGY (BEIJING) CO., LTD.) 09 October 2020 (2020-10-09) entire document | 1-26 |
| A | CN 109587008 A (HUAWEI TECHNOLOGY SERVICE CO., LTD.) 05 April 2019 (2019-04-05) entire document | 1-26 |

☑ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 October 2021** | **26 October 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/117445**

### C.    DOCUMENTS CONSIDERED TO BE RELEVANT

| Category* | Citation of document, with indication, where appropriate, of the relevant passages | Relevant to claim No. |
|---|---|---|
| A | CN 109818793 A (QUARKIOE (BEIJING) TECHNOLOGY DEVELOPMENT CO., LTD.) 28 May 2019 (2019-05-28) entire document | 1-26 |
| A | WO 2020022953 A1 (SINGAPORE TELECOMMUNICATIONS LIMITED) 30 January 2020 (2020-01-30) entire document | 1-26 |

Form PCT/ISA/210 (second sheet) (January 2015)

INTERNATIONAL SEARCH REPORT
Information on patent family members

International application No.

**PCT/CN2021/117445**

| Patent document cited in search report | | | Publication date (day/month/year) | Patent family member(s) | Publication date (day/month/year) |
|---|---|---|---|---|---|
| CN | 110602041 | A | 20 December 2019 | None | |
| CN | 111123388 | A | 08 May 2020 | None | |
| CN | 111757365 | A | 09 October 2020 | None | |
| CN | 109587008 | A | 05 April 2019 | None | |
| CN | 109818793 | A | 28 May 2019 | None | |
| WO | 2020022953 | A1 | 30 January 2020 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011124425